# EUROPEAN PATENT SPECIFICATION

(11) **EP 4 311 369 B1**
(45) Date of publication and mention of the grant of the patent: **03.06.2026**
(21) Application number: 22776182.2
(22) Date of filing: 28.03.2022
(51) Int. Cl.: H04W 76/27, H04W 60/00, H04W 76/30, H04W 8/18, H04W 36/00

(54) **METHOD AND APPARATUS BY WHICH USER EQUIPMENT MANAGES SHORT-TIME SWITCHING GAP CONFIGURATION INFORMATION IN MOBILE COMMUNICATION SYSTEM**
VERFAHREN UND VORRICHTUNG ZUR VERWALTUNG VON KONFIGURATIONSINFORMATIONEN EINER KURZZEITIGEN SCHALTLÜCKE DURCH EIN BENUTZERGERÄT IN EINEM MOBILKOMMUNIKATIONSSYSTEM
PROCÉDÉ ET APPAREIL PAR LESQUELS UN ÉQUIPEMENT UTILISATEUR GÈRE DES INFORMATIONS DE CONFIGURATION D'INTERVALLE DE COMMUTATION À COURTE DURÉE DANS UN SYSTÈME DE COMMUNICATION MOBILE

(30) Priority: 26.03.2021 KR 20210039939
(43) Date of publication of application: 24.01.2024
(73) Proprietor: Samsung Electronics Co., Ltd., Suwon-si, Gyeonggi-do 16677 (KR)
(72) Inventor: JUNG, Sangyeob, Suwon-si, Gyeonggi-do 16677 (KR)
(74) Representative: Gulde & Partner
(86) International application number: PCT/KR2022/004340
(87) International publication number: WO 2022/203482

(56) References cited:
- WO-A1-2021/015598
- WO-A1-2021/031067
- WO-A1-2021/034105
- US-A1- 2021 014 934
- HUAWEI ET AL: "KI#1 KI#3, New Sol for Annex: N3GPP for MUSIM Service Concurrency", vol. SA WG2, no. e-meeting; 20200819 - 20200901, 2 September 2020 (2020-09-02), XP051928680, Retrieved from the Internet <URL:https://ftp.3gpp.org/tsg_sa/WG2_Arch/TSGS2_140e_Electronic/Docs/S2-2006017.zip S2-2006017 was 5486r02.doc> [retrieved on 20200902]
- VICE CHAIRMAN (NOKIA): "Report on LTE legacy, Mobility, DCCA, Multi-SIM and RAN slicing", vol. RAN WG2, no. electronic; 20210125 - 20210205, 5 February 2021 (2021-02-05), XP051978137, Retrieved from the Internet <URL:https://ftp.3gpp.org/tsg_ran/WG2_RL2/TSGR2_113-e/Inbox/R2-2101951.zip R2-2101951 Report on LTE legacy, Mobility, DCCA, Multi-SIM and RAN slicing.docx> [retrieved on 20210205]
- ETSI MCC: "Report of 3GPP TSG RAN2#112-e meeting, Online", no. ; 20201102 - 20201113, 22 January 2021 (2021-01-22), XP052170877, Retrieved from the Internet <URL:https://ftp.3gpp.org/tsg_ran/WG2_RL2/TSGR2_113-e/Docs/R2-2100001.zip R2-2100001.docx> [retrieved on 20210122]
- ETSI MCC: "Report of 3GPP TSG RAN2#113-e meeting, Online", no. 20210125 - 20210205, 21 February 2021 (2021-02-21), XP051980195, Retrieved from the Internet <URL:https://ftp.3gpp.org/tsg_ran/WG2_RL2/TSGR2_113-e/Report/Draft_R2-113-e_Meeting_Report_v1.zip Draft_R2-113-e_Meeting_Report_v1.docx> [retrieved on 20210221]
- "3rd Generation Partnership Project; Technical Specification Group Services and System Aspects; Study on system enablers for devices having multiple Universal Subscriber Identity Modules (USIM) (Release 17)", 3GPP STANDARD; TECHNICAL REPORT; 3GPP TR 23.761, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG2, no. V1.3.0, 23 March 2021 (2021-03-23), Mobile Competence Centre ; 650, route des Lucioles ; F-06921 Sophia-Antipolis Cedex ; France , pages 1 - 109, XP052000096
- APPLE: "UE Assisted RRC State Transition", 3GPP DRAFT; R2-1907166_UE ASSISTED RRC STATE TRANSITION, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. Reno, USA; 20190513 - 20190517, 3 May 2019 (2019-05-03), Mobile Competence Centre ; 650, route des Lucioles ; F-06921 Sophia-Antipolis Cedex ; France , XP051711457
- VIVO: "[post112-e][256][Multi-SIM] Network switching details (vivo)", 3GPP DRAFT; R2-2102262, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. Online; 20210125 - 20210205, 10 February 2021 (2021-02-10), Mobile Competence Centre ; 650, route des Lucioles ; F-06921 Sophia-Antipolis Cedex ; France , XP051977989

## Description

### Technical Field

The present disclosure relates to a method and apparatus by which a user equipment (UE) manages short-time switching gap configuration information in a mobile communication system, and more particularly, to a method and apparatus by which a UE supporting a multi-universal subscriber identity module (MUSIM) and being in a radio resource control (RRC)-inactive state manages short-time switching gap configuration information.

### Background Art

A 5^{th}-generation (5G) mobile communication technology defines a broad frequency band to enable a high date rate and new services, and may be implemented not only in a 'Sub 6GHz' band including 3.5 GHz but also in an ultra high frequency band ('Above 6GHz') called millimeter wave (mmWave) including 28GHz, 39GHz, and the like. Also, for a 6^{th}-generation (6G) mobile communication technology called a system beyond 5G communication (beyond 5G), in order to achieve a data rate fifty times faster than the 5G mobile communication technology and ultra-low latency one-tenth of the 5G mobile communication technology, implementation of the 6G mobile communication technology in the terahertz band (e.g., the 95 GHz to 3 THz band) is being considered.

In the early phase of the development of the 5G mobile communication technology, in order to support services and satisfy performance requirements of enhanced Mobile BroadBand (eMBB), Ultra Reliable Low Latency Communications (URLLC), and massive Machine-Type Communications (mMTC), there has been ongoing standardization about beamforming and massive multiple input multiple output (MIMO) for mitigating pathloss of radio waves and increasing transmission distances of radio wave in a mmWave band, supporting numerologies (for example, operation of multiple subcarrier spacings) for efficiently utilizing mmWave resources and dynamic operation of slot formats, initial access technologies for supporting multi-beam transmission and broadband, definition and operation of bandwidth part (BWP), new channel coding methods such as a low density parity check (LDPC) code for a large amount of data transmission and a polar code for highly reliable transmission of control information, L2 pre-processing, and network slicing for providing a dedicated network specialized to a specific service.

Currently, there are ongoing discussions about improvement and performance enhancement of initial 5G mobile communication technologies in consideration of services to be supported by the 5G mobile communication technology, and there has been physical layer standardization of technologies such as vehicle-to-everything (V2X) for aiding driving determination by autonomous vehicles based on information regarding positions and states of vehicles transmitted by the vehicles and for enhancing user convenience, new radio unlicensed (NR-U) aimed at system operations conforming to various regulation-related requirements in unlicensed bands, NR UE power saving, non-terrestrial network (NTN) that is UE-satellite direct communication for providing coverage in an area in which communication with terrestrial networks is unavailable, and positioning.

Moreover, there has been ongoing standardization of air interface architecture/protocol regarding technologies such as Industrial Internet of Things (IIoT) for supporting new services through interworking and convergence with other industries, integrated access and backhaul (IAB) for providing a node for network service area expansion by supporting a wireless backhaul link and an access link in an integrated manner, mobility enhancement including conditional handover and dual active protocol stack (DAPS) handover, and two-step random access for simplifying random access procedures (2-step RACH for NR), and standardization of system architecture/service regarding a 5G baseline architecture (for example, service based architecture or service based interface) for combining network functions virtualization (NFV) and software-defined networking (SDN) technologies, and mobile edge computing (MEC) for receiving services based on UE positions.

When the 5G mobile communication system is commercialized, connected devices being on a rapidly increasing trend are being predicted to be connected to communication networks, and therefore, it is predicted that enhancement of functions and performance of the 5G mobile communication system and integrated operations of the connected devices are required. To this end, new researches are scheduled for eXtended Reality (XR) for efficiently supporting Augmented Reality (AR), Virtual Reality (VR), Mixed Reality (MR) and the like, 5G performance improvement and complexity reduction by utilizing artificial intelligence (AI) and machine learning (ML), Al service support, metaverse service support, drone communication, and the like.

Also, such development of the 5G mobile communication system will serve as a basis for developing not only new waveforms for providing coverage in terahertz bands of 6G mobile communication technologies, multi-antenna transmission technologies such as full dimensional MIMO (FD-MIMO), array antennas and large-scale antennas, metamaterial-based lenses and antennas for improving coverage of terahertz band signals, high-dimensional space multiplexing technology using orbital angular momentum (OAM), and reconfigurable intelligent surface (RIS), but also full-duplex technology for increasing frequency efficiency of the 6G mobile communication technologies and improving system networks, Al-based communication technology for implementing system optimization by utilizing satellites and Al from a design stage and internalizing end-to-end Al support functions, and next-generation distributed computing technology for implementing services at levels of complexity exceeding the limit of UE operation capability by utilizing ultra-high-performance communication and computing resources.

3GPP DRAFT; S2-2006017 discloses "KI#1 KI#3, New Sol for Annex: N3GPP for MUSIM Service Concurrency". WO 2021/015598 A1 discloses a method for a wireless communication device to perform communication based on multiple SIMs. WO 2021/034105 A1 discloses an operation method of an access and mobility management function (AMF) in a wireless communication system.

### Disclosure

### Technical Solution

The present invention is set out in the appended set of claims.

### Advantageous Effects

According to an embodiment of the present disclosure, provided are a method and apparatus by which a user equipment (UE) supporting a multi-universal subscriber identity module (MUSIM) and being in a radio resource control (RRC)-inactive state manages short-time switching gap configuration information.

### Description of Drawings

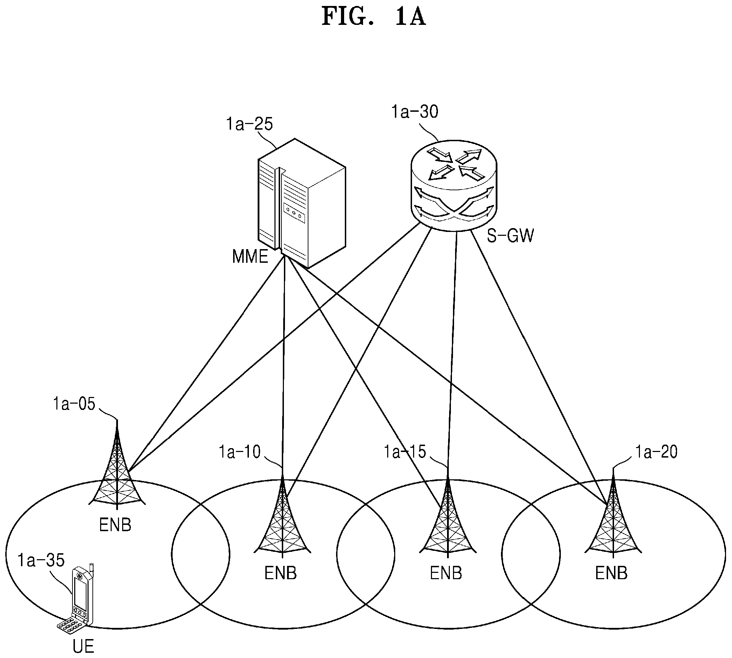

FIG. 1A is a diagram illustrating a configuration of a long term evolution (LTE) system.

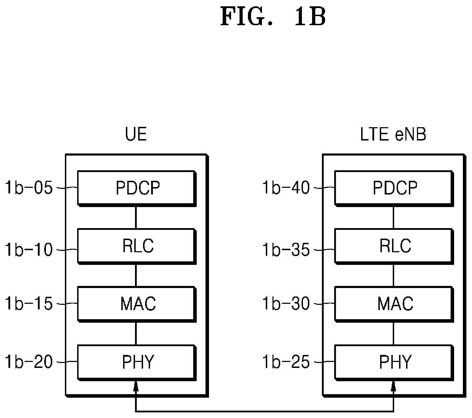

FIG. 1B is a diagram illustrating a radio protocol architecture of an LTE system.

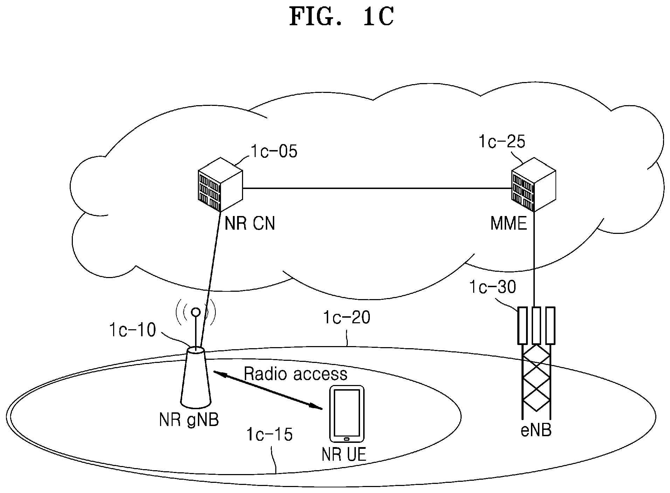

FIG. 1C is a diagram illustrating an architecture of a next-generation mobile communication system.

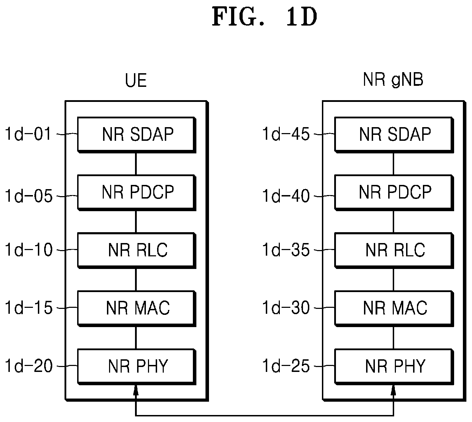

FIG. 1D is a diagram illustrating a radio protocol architecture of the next-generation mobile communication system.

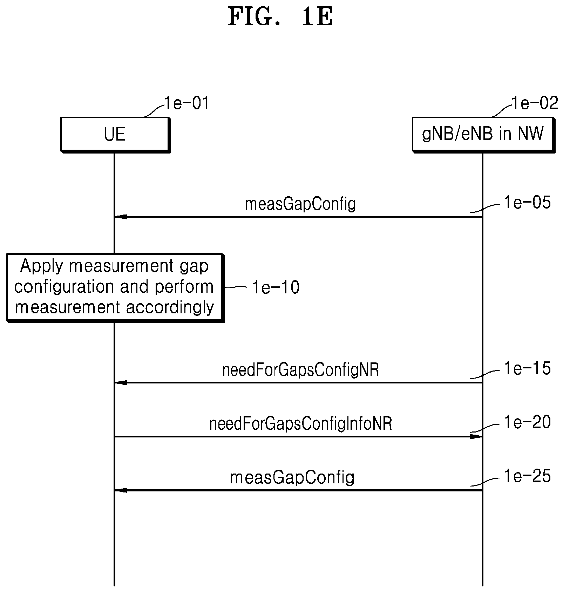

FIG. 1E is a flowchart of a procedure in which a user equipment (UE) in a radio resource control (RRC) connected mode (RRC_CONNECTED) performs measurement based on measurement configuration information configured by a base station (BS).

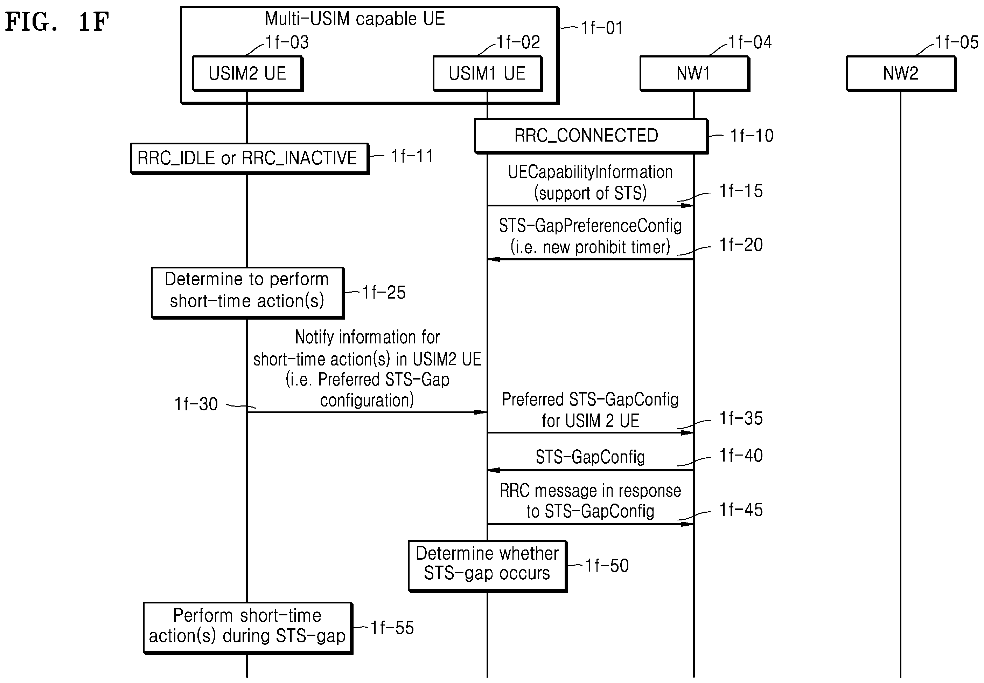

FIG. 1F is a diagram in which a UE supporting multiple universal subscriber identity modules (USIMs) (multi-USIM UE) performs an operation associated with one USIM while the UE maintains its RRC connected mode (RRC_CONNECTED) with a BS associated with another USIM, according to an embodiment of the present disclosure.

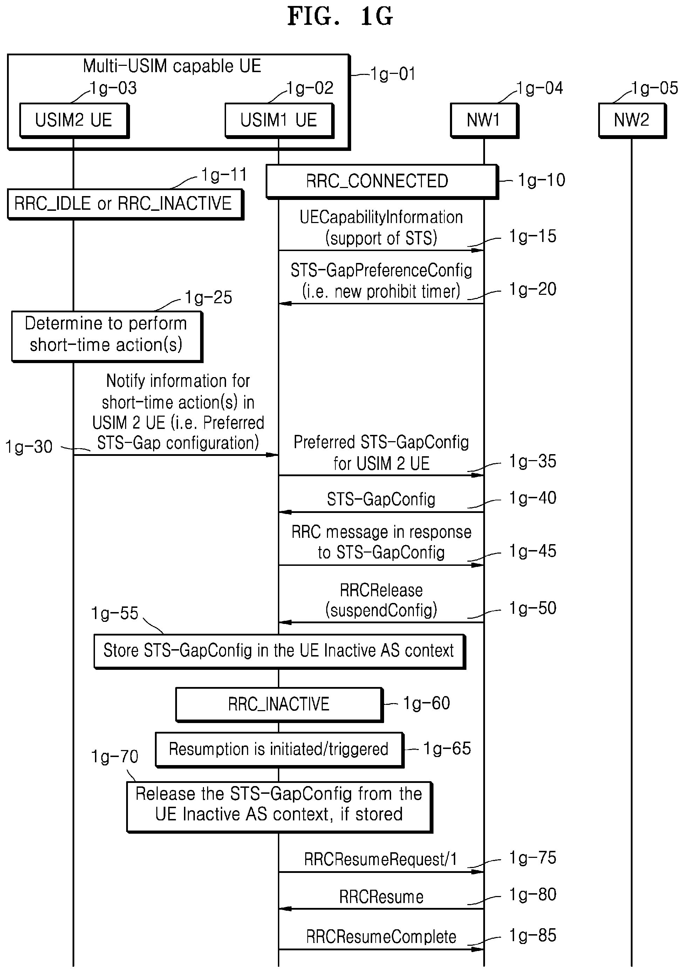

FIG. 1G is a diagram in which a UE supporting multiple USIMs (multi-USIM UE) manages short-time switching gap configuration information when one USIM transitions to an RRC connected mode, according to an embodiment of the present disclosure.

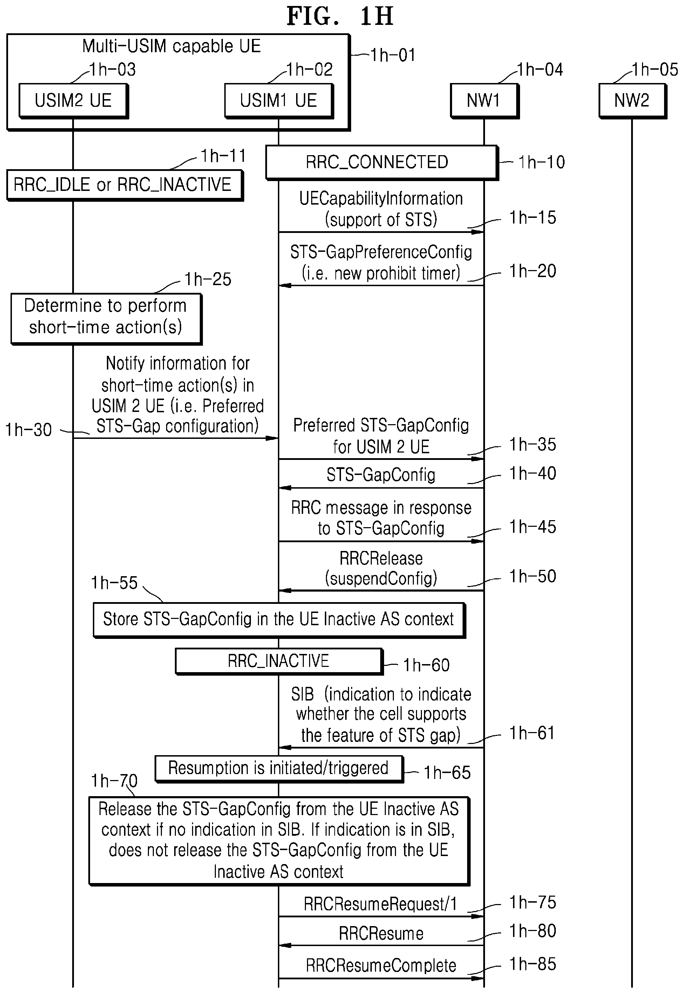

FIG. 1H is a diagram in which a UE supporting multiple USIMs (multi-USIM UE) manages short-time switching gap configuration information when one USIM transitions to an RRC connected mode, according to an embodiment of the present disclosure.

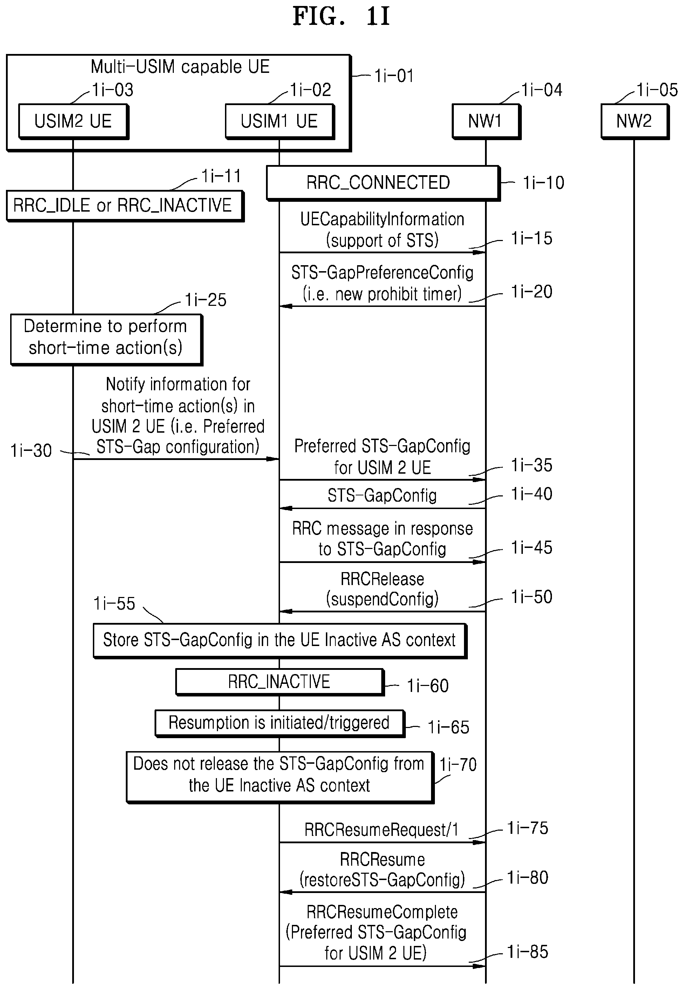

FIG. 1I is a diagram in which a UE supporting multiple USIMs (multi-USIM UE) manages short-time switching gap configuration information when one USIM transitions to an RRC connected mode, according to an embodiment of the present disclosure.

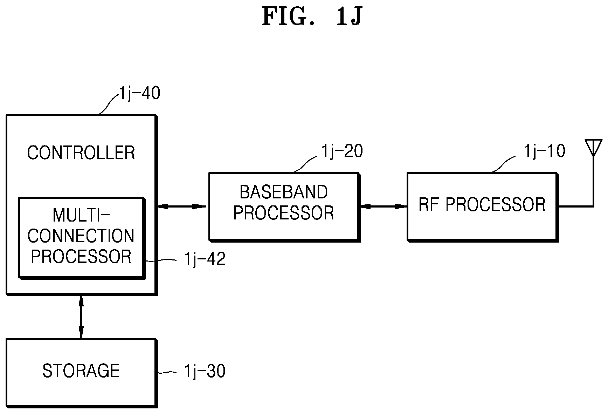

FIG. 1J is a block diagram illustrating an inner configuration of a UE according to an embodiment of the present disclosure.

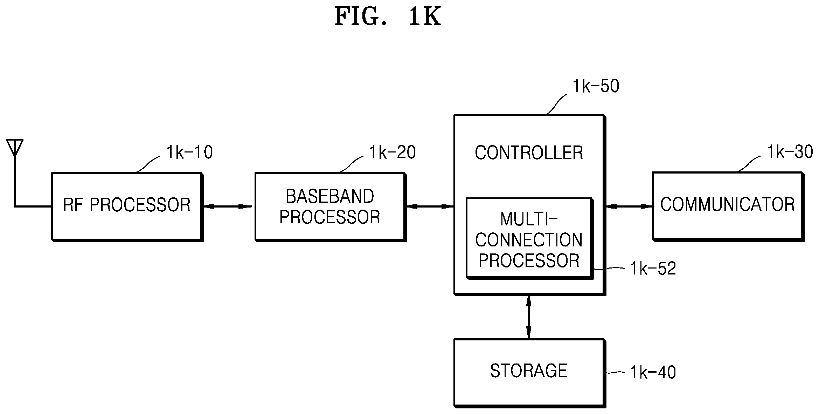

FIG. 1K is a block diagram illustrating a configuration of a BS according to an embodiment of the present disclosure.

### Mode for Invention

The invention made is captured in the embodiments referring to figure 1G.

Hereinafter, embodiments of the present disclosure will now be described more fully with reference to the accompanying drawings. In the descriptions of embodiments, certain detailed explanations of the related art which are well known in the art to which the present disclosure belongs and are not directly related to the present disclosure are omitted. By omitting unnecessary explanations, the essence of the present disclosure may not be obscured and may be explicitly conveyed.

For the same reasons, in the drawings, some elements may be exaggerated, omitted, or roughly illustrated. Also, the size of each element does not exactly correspond to an actual size of each element. In the drawings, the same or corresponding elements are denoted by the same reference numerals.

The advantages and features of the present disclosure and methods of achieving them will become apparent with reference to embodiments of the present disclosure described in detail below with reference to the accompanying drawings. The present disclosure may, however, be embodied in many different forms and should not be construed as being limited to the embodiments set forth herein. Rather, these embodiments are provided so that the present disclosure will be thorough and complete and will fully convey the concept of the present disclosure to one of ordinary skill in the art, and the present disclosure will only be defined by the appended claims. Throughout the specification, like reference numerals denote like elements.

It will be understood that each block of flowchart illustrations, and combinations of blocks in the flowchart illustrations, may be implemented by computer program instructions. The computer program instructions may be provided to a processor of a general-purpose computer, special purpose computer, or other programmable data processing apparatus, such that the instructions, which are executed via the processor of the computer or other programmable data processing apparatus, generate means for performing functions specified in the flowchart block(s). The computer program instructions may also be stored in a computer-executable or computer-readable memory that may direct the computer or other programmable data processing apparatus to function in a particular manner, such that the instructions stored in the computer-executable or computer-readable memory may produce an article of manufacture including instruction means that perform the functions specified in the flowchart block(s). The computer program instructions may also be loaded onto the computer or other programmable data processing apparatus to cause a series of operational steps to be performed on the computer or other programmable apparatus to produce a computer implemented process such that the instructions that are executed on the computer or other programmable apparatus provide operations for implementing the functions specified in the flowchart block(s).

In addition, each block of the flowchart illustrations may represent a module, segment, or portion of code, which includes one or more executable instructions for performing specified logical function(s). It should also be noted that in some alternative implementations, the functions noted in the blocks may occur out of the order. For example, two blocks shown in succession may in fact be executed substantially concurrently or the blocks may sometimes be executed in the reverse order, depending upon the functionality involved.

The term "... unit" as used in the present embodiment refers to a software or hardware component, such as field-programmable gate array (FPGA) or application-specific integrated circuit (ASIC), which performs certain tasks. However, the term "... unit" does not mean to be limited to software or hardware. A "... unit" may be configured to be in an addressable storage medium or configured to operate one or more processors. Thus, according to an embodiment, a "... unit" may include, by way of example, components, such as software components, object-oriented software components, class components, and task components, processes, functions, attributes, procedures, subroutines, segments of program code, drivers, firmware, microcode, circuitry, data, databases, data structures, tables, arrays, and variables. The functionality provided in the elements and "... units" may be combined into fewer elements and "... units" or further separated into additional elements and "... units". Further, the elements and "... units" may be implemented to operate one or more central processing units (CPUs) in a device or a secure multimedia card. Also, according to an embodiment, a "... unit" may include one or more processors.

In the description of the present disclosure, detailed descriptions of the related art are omitted when it is deemed that they may unnecessarily obscure the essence of the present disclosure. Hereinafter, embodiments of the present disclosure will now be described with reference to the accompanying drawings.

Hereinafter, terms identifying an access node, terms indicating network entities, terms indicating messages, terms indicating an interface between network entities, and terms indicating various pieces of identification information, as used in the following description, are exemplified for convenience of descriptions. Accordingly, the present disclosure is not limited to terms to be described below, and other terms indicating objects having equal technical meanings may be used.

For convenience of descriptions, the present disclosure uses terms and names defined in the 3^{rd} Generation Partnership Project (3GPP) Long Term Evolution (LTE) rules. However, the present disclosure is not limited to these terms and names, and may be equally applied to communication systems conforming to other standards. In the present disclosure, an evolved node B (eNB) may be interchangeably used with a next-generation node B (gNB) for convenience of descriptions. That is, a base station (BS) described by an eNB may represent a gNB. Also, the term "terminals" may refer to not only mobile phones, narrowband Internet of Things (NB-IoT) devices, and sensors but also other wireless communication devices.

In the present disclosure, a base station is an entity that allocates resources to a terminal, and may be at least one of a next-generation node B (gNB), an evolved node B (eNB), a Node B, a base station (BS), a radio access unit, a BS controller, or a node on a network. In the present disclosure, a terminal may include a user equipment (UE), a mobile station (MS), a cellular phone, a smartphone, a computer, or a multimedia system capable of performing a communication function. However, the present disclosure is not limited to the above example.

In particular, the present disclosure may be applied to 3GPP NR (5th generation mobile communication standards). The present disclosure is applicable to intelligent services (e.g., smart home, smart building, smart city, smart car or connected car, health care, digital education, retail, security, and safety services) based on 5G communication technology and Internet of things (IoT) technology. In the present disclosure, an eNB may be interchangeably used with a gNB for convenience of description. That is, a BS described by an eNB may represent a gNB. Also, the term "terminals (UEs)" may refer to not only mobile phones, NB-loT devices, and sensors but also other wireless communication devices.

Wireless communication systems providing voice-based services in early stages are being developed to broadband wireless communication systems providing highspeed and high-quality packet data services according to communication standards such as high speed packet access (HSPA), long term evolution (LTE) or evolved universal terrestrial radio access (E-UTRA), LTE-advanced (LTE-A), LTE-Pro of 3GPP, high rate packet data (HRPD), ultra mobile broadband (UMB) of 3GPP2, and 802.16e of the Institute of Electrical and Electronics Engineers (IEEE).

As a representative example of the broadband wireless communication systems, LTE systems employ orthogonal frequency division multiplexing (OFDM) for a downlink (DL) and employs single carrier-frequency division multiple access (SC-FDMA) for an uplink (UL). The UL refers to a radio link for transmitting data or a control signal from a terminal (e.g., a UE or an MS) to a base station (e.g., an eNB or a BS), and the DL refers to a radio link for transmitting data or a control signal from the base station to the terminal.

Although LTE, LTE-A, LTE Pro, or 5G (or NR) systems are mentioned as examples in the following description, embodiments of the present disclosure may also be applied to other communication systems having similar technical backgrounds or channel types. Furthermore, the embodiments of the present disclosure may also be applied to other communication systems through partial modification without greatly departing from the scope of the present disclosure based on determination by one of ordinary skill in the art.

FIG. 1A is a diagram illustrating a configuration of an LTE system.

Referring to FIG. 1A, as illustrated, a radio access network (RAN) of the LTE system includes a plurality of eNBs (or nodes B or BSs) 1a-05, 1a-10, 1a-15, and 1a-20, a mobility management entity (MME) 1a-25, and a serving-gateway (S-GW) 1a-30. A UE (or a terminal) 1a-35 accesses an external network via the eNB 1a-05, 1a-10, 1a-15, or 1a-20 and the S-GW 1a-30.

The eNBs 1a-05, 1a-10, 1a-15, and 1a-20 are access nodes of a cellular network, and provide a wireless access to UEs that access the network. That is, in order to service traffic of users, the eNBs 1a-05, 1a-10, 1a-15, and 1a-20 support connection between UEs and a core network (CN) by collating status information, e.g., buffer status information of UEs, available transmission power status information, and channel state information and performing scheduling.

Also, the eNBs 1a-05, 1a-10, 1a-15, and 1a-20 may each correspond to a legacy node B of a universal mobile telecommunications system (UMTS). The eNB 1a-05, 1a-10, 1a-15, or 1a-20 may be connected to the UE 1a-35 via wireless channels and may perform complex functions compared to the legacy node B. All user traffic data including real-time services such as Voice over Internet protocol (VoIP) may be serviced through shared channels in the LTE system, and thus an entity for collating status information, e.g., buffer status information of UEs, available transmission power status information, and channel state information and performing scheduling may be required and the eNB 1a-05, 1a-10, 1a-15, or 1a-20 may operate as such an entity. One eNB may generally control a plurality of cells. The LTE system may use radio access technology such as Orthogonal Frequency Division Multiplexing (OFDM) in a bandwidth of 20 MHz to achieve a data rate of 100 Mbps. Furthermore, Adaptive Modulation & Coding (AMC) , which determines a modulation scheme and a channel coding rate in accordance with a channel state of the UE, is applied.

The MME 1a-25 is an entity for performing a mobility management function and various control functions on the UE and is connected to the plurality of eNBs. The S-GW 1a-30 is an entity for providing data bearers. The MME 1a-25 and the S-GW 1a-30 may perform authentication, bearer management, etc. with respect to a UE accessing the network, and may process packets received from the eNBs 1a-05, 1a-10, 1a-15, and 1a-20 or packets to be transmitted to the eNBs 1a-05, 1a-10, 1a-15, and 1a-20.

FIG. 1B is a diagram illustrating a radio protocol architecture of an LTE system.

Referring to FIG. 1B, radio protocols of the LTE system may include Packet Data Convergence Protocol (PDCP) layers 1b-05 and 1b-40, Radio Link Control (RLC) layers 1b-10 and 1b-35, and Medium Access Control (MAC) layers 1b-15 and 1b-30 respectively in a UE and an eNB. The PDCP layer 1b-05 or 1b-40 performs IP header compression/decompression. Main functions of the PDCP layer are summarized as shown below.
- Header compression and decompression: robust header compression (ROHC) only
- Transfer of user data
- In-sequence delivery of upper layer packet data units (PDUs) at PDCP re-establishment procedure for RLC acknowledged mode (AM)
- For split bearers in DC (only support for RLC AM): PDCP PDU routing for transmission and PDCP PDU reordering for reception
- Duplicate detection of lower layer service data units (SDUs) at PDCP re-establishment procedure for RLC AM
- Retransmission of PDCP SDUs at handover and, for split bearers in DC, of PDCP PDUs at PDCP data-recovery procedure, for RLC AM
- Ciphering and deciphering
- Timer-based SDU discard in uplink.

The RLC layer 1b-10 or 1b-35 performs an automatic repeat request (ARQ) operation by reconfiguring PDCP PDUs to appropriate sizes. Main functions of the RLC layer are summarized as shown below.
- Transfer of upper layer PDUs
- Error Correction through ARQ (only for AM data transfer)
- Concatenation, segmentation and reassembly of RLC SDUs (only for unacknowledged mode (UM) and AM data transfer)
- Re-segmentation of RLC data PDUs (only for AM data transfer)
- Reordering of RLC data PDUs (only for UM and AM data transfer)
- Duplicate detection (only for UM and AM data transfer)
- Protocol error detection (only for AM data transfer)
- RLC SDU discard (only for UM and AM data transfer)
- RLC re-establishment

The MAC layer 1b-15 or 1b-30 is connected to a plurality of RLC layer entities configured for one UE and multiplexes RLC PDUs into a MAC PDU and demultiplexes the RLC PDUs from the MAC PDU. Main functions of the MAC layer are summarized as shown below.
- Mapping between logical channels and transport channels
- Multiplexing/demultiplexing of MAC SDUs belonging to one or different logical channels into/from transport blocks (TB) delivered to/from the physical layer on transport channels
- Scheduling information reporting
- Error correction through HARQ
- Priority handling between logical channels of one UE
- Priority handling between UEs by means of dynamic scheduling
- Multimedia broadcast/multicast service (MBMS) service identification
- Transport format selection
- Padding

A physical (PHY) layer 1b-20 or 1b-25 channel-codes and modulates upper layer data into OFDM symbols and transmits the OFDM symbols through a wireless channel, or demodulates OFDM symbols received through a wireless channel and channel-decodes and delivers the OFDM symbols to an upper layer.

Although not illustrated in FIG. 1B, a radio resource control (RRC) layer exists as an upper layer of a PDCP layer at each of the UE and the eNB, and the RRC layer may exchange connection and measurement configuration control messages for controlling radio resources.

FIG. 1C is a diagram illustrating an architecture of a next-generation mobile communication system.

Referring to FIG. 1C, as illustrated, a radio access network of the next-generation mobile communication system (a 5G or NR system) includes a new radio node B (NR gNB or NR BS) 1c-10 and a new radio core network (NR CN) (or a next generation core network (NG CN)) 1c-05. A NR UE (or terminal) 1c-15 may access an external network via the NR gNB 1c-10 and the NR CN 1c-05.

In FIG. 1C, the NR gNB 1c-10 corresponds to an eNB of the legacy LTE system. The NR gNB may be connected to the NR UE 1c-15 via wireless channels and may provide superior services compared to a legacy node B. All user traffic data may be serviced through shared channels in the NR or 5G mobile communication system, and thus, an entity for collating buffer status information of UEs, available transmission power status information, and channel state information and performing scheduling may be required and the NR gNB 1c-10 may operate as such an entity. One NR gNB generally controls a plurality of cells. The next-generation mobile communication system (the 5G or NR system) may have a maximum bandwidth greater than the maximum bandwidth of the legacy LTE system so as to achieve an ultra-high data rate, compared to the legacy LTE system, and may additionally apply a beamforming technology by using OFDM as a radio access technology. Furthermore, AMC may be applied to determine a modulation scheme and a channel coding rate in accordance with a channel state of the UE. The NR CN 1c-05 may perform functions such as mobility support, bearer configuration, and quality of service (QoS) configuration. The NR CN 1c-05 is an entity for performing a mobility management function and various control functions on the UE and is connected to a plurality of BSs. Also, the next-generation mobile communication system (the 5G or NR system) may cooperate with the legacy LTE system, and the NR CN 1c-05 may be connected to an MME 1c-25 via a network interface. The MME 1c-25 is connected to an eNB 1c-30 that is a legacy BS.

FIG. 1D is a diagram illustrating a radio protocol architecture of the next-generation mobile communication system. FIG. 1D is a diagram illustrating a radio protocol architecture of the next-generation mobile communication system to which the present disclosure is applicable.

Referring to FIG. 1D, the radio protocol architecture of the next-generation mobile communication system (the 5G or NR system) may include NR Service Data Adaptation Protocol (SDAP) layers 1d-01 and 1d-45, NR PDCP layers 1 d-05 and 1d-40, NR RLC layers 1d-10 and 1d-35, and NR MAC layers 1d-15 and 1d-30 respectively for a UE and an NR gNB.

Main functions of the NR SDAP layer 1d-01 or 1d-45 may include some of the following functions.
- transfer of user plane data
- mapping between a QoS flow and a DRB for both DL and UL
- marking QoS flow identifier (ID) in both DL and UL packets
- reflective QoS flow to DRB mapping for the UL SDAP PDUs.

With regard to a SDAP layer entity, the UE may be configured with information about whether to use a header of the SDAP layer entity or to use functions of the SDAP layer entity, through an RRC message per PDCP layer entity, per bearer, or per logical channel. Also, when the SDAP header is configured, a 1-bit non access stratum (NAS) reflective QoS indicator and a 1-bit access stratum (AS) reflective QoS indicator of the SDAP header may indicate the UE to update or reconfigure UL and DL QoS flow and data bearer mapping information. The SDAP header may include QoS flow ID information indicating QoS. The QoS information may be used as data processing priority information or scheduling information for appropriately supporting a service.

Main functions of the NR PDCP layer 1d-05 or 1d-40 may include some of the following functions.
- Header compression and decompression: ROHC only
- Transfer of user data
- In-sequence delivery of upper layer PDUs
- Out-of-sequence delivery of upper layer PDUs
- PDCP PDU reordering for reception
- Duplicate detection of lower layer SDUs
- Retransmission of PDCP SDUs
- Ciphering and deciphering
- Timer-based SDU discard in uplink.

The reordering function of the NR PDCP layer entity may include a function of reordering PDCP PDUs received from a lower layer, on a PDCP sequence number (SN) basis, and a function of delivering the reordered data to an upper layer in order. Alternatively, the reordering function of the NR PDCP layer entity may include a function of delivering the reordered data to an upper layer out of order, a function of recording missing PDCP PDUs by reordering the received PDCP PDUs, a function of reporting status information of the missing PDCP PDUs to a transmitter, and a function of requesting to retransmit the missing PDCP PDUs.

Main functions of the NR RLC layer 1d-10 or 1d-35 may include some of the following functions.
- Transfer of upper layer PDUs
- In-sequence delivery of upper layer PDUs
- Out-of-sequence delivery of upper layer PDUs
- Error Correction through ARQ
- Concatenation, segmentation and reassembly of RLC SDUs
- Re-segmentation of RLC data PDUs
- Reordering of RLC data PDUs
- Duplicate detection
- Protocol error detection
- RLC SDU discard
- RLC re-establishment

The in-sequence delivery function of the NR RLC layer entity may indicate a function of delivering RLC SDUs received from a lower layer to an upper layer in order. In more detail, the in-sequence delivery function of the NR RLC layer entity may include a function of reassembling the RLC SDUs and delivering the reassembled RLC SDU when a plurality of RLC SDUs segmented from one RLC SDU are received, a function of reordering received RLC PDUs on an RLC SN or PDCP SN basis, a function of recording missing RLC PDUs by reordering the received RLC PDUs, a function of reporting status information of the missing RLC PDUs to a transmitter, a function of requesting to retransmit the missing RLC PDUs, a function of delivering only RLC SDUs prior to a missing RLC SDU, to an upper layer in order when the missing RLC SDU exists, a function of delivering all RLC SDUs received before a timer starts, to an upper layer in order although a missing RLC SDU exists when a certain timer expires, or a function of delivering all RLC SDUs received so far, to an upper layer in order although a missing RLC SDU exists when a certain timer expires.

Also, the NR RLC layer entity may process the RLC PDUs in order of reception (regardless of SNs, and in order of arrival) and may deliver the RLC PDUs to the PDCP layer entity in a manner of out-of-sequence delivery. When it is a segment, the NR RLC layer entity may reassemble the segment with other segments stored in a buffer or subsequently received, into a whole RLC PDU and may transmit the RLC PDU to the PDCP layer entity. The NR RLC layer may not have a concatenation function, and the concatenation function may be performed by the NR MAC layer or be replaced with a multiplexing function of the NR MAC layer.

The out-of-sequence delivery function of the NR RLC layer entity may include a function of directly delivering RLC SDUs received from a lower layer to an upper layer out of order. In more detail, the in-sequence delivery function of the NR RLC layer entity may include a function of reassembling the RLC SDUs and delivering the reassembled RLC SDU when a plurality of RLC SDUs segmented from one RLC SDU are received, a function of recording missing RLC PDUs by storing and reordering received RLC PDUs on an RLC SN or PDCP SN basis, a function of reporting status information of the missing RLC PDUs to a transmitter, a function of requesting to retransmit the missing RLC PDUs, a function of delivering only RLC SDUs prior to a missing RLC SDU, to an upper layer in order when the missing RLC SDU exists, a function of delivering all RLC SDUs received before a timer starts, to an upper layer in order although a missing RLC SDU exists when a certain timer expires, or a function of delivering all RLC SDUs received so far, to an upper layer in order although a missing RLC SDU exists when a certain timer expires.

The NR MAC layer 1d-15 or 1d-30 may be connected to a plurality of NR RLC layers configured for one UE, and main functions of the NR MAC layer may include some of the following functions.
- Mapping between logical channels and transport channels
- Multiplexing/demultiplexing of MAC SDUs
- Scheduling information reporting
- Error correction through HARQ
- Priority handling between logical channels of one UE
- Priority handling between UEs by means of dynamic scheduling
- MBMS service identification
- Transport format selection
- Padding

An NR PHY layer 1d-20 or 1d-25 may channel-code and modulate upper layer data into OFDM symbols and may transmit the OFDM symbols via a wireless channel, or may demodulate OFDM symbols received via a wireless channel and channel-decode and may deliver the OFDM symbols to an upper layer.

FIG. 1E is a flowchart of a procedure in which a UE in an RRC connected mode (RRC_CONNECTED) performs measurement based on measurement configuration information configured by a BS.

Referring to FIG. 1E, in operation 1e-05, a UE 1e-01 may receive, from a gNB/eNB (BS) 1e-02, a preset RRC message (e.g., an RRC connection resume message (RRCResume) or an RRC connection reconfiguration message (RRCReconfiguration) including measurement configuration information (measConfig). The measurement configuration information may indicate measurement configuration information the UE applies in the RRC_CONNECTED mode. The measurement configuration information (measConfig) may include measurement gap configuration information (MeasGapConfig). The BS 1e-02 may configure gap configuration information (GapConfig) in gap configuration information (MeasGapConfig) for each frequency range (FR) (e.g., gapFR1 or gapFR2) or may configure gap configuration information to be applied to a UE (e.g., gapUE) regardless of an FR. The measurement gap configuration information (MeasGapConfig) may include parameters of at least one of the followings, and definition of each parameter is as below.

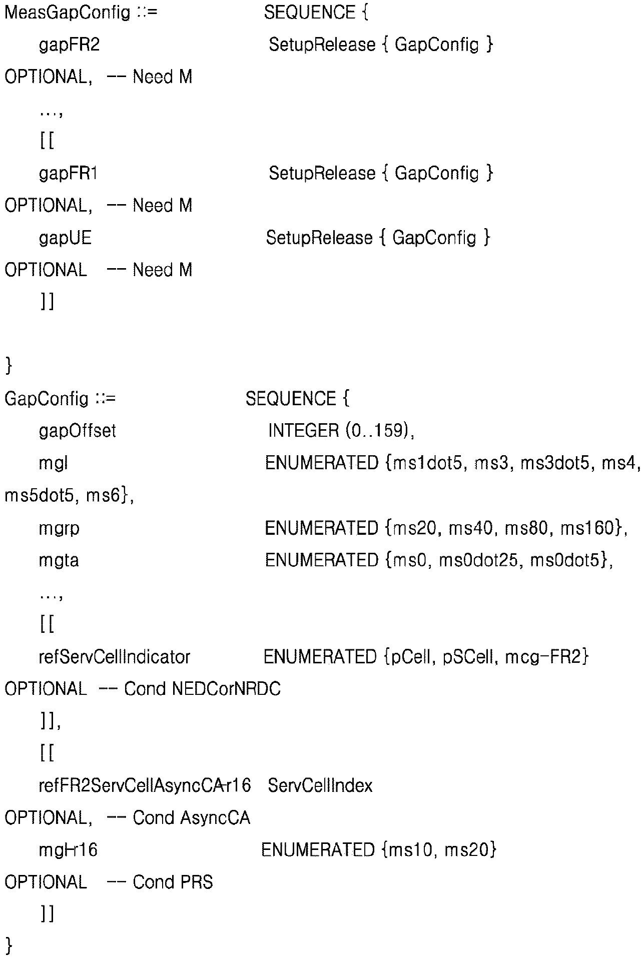

| |
|---|
| ***gapFR1*** |
| Indicates measurement gap configuration that applies to FR1 only. In (NG)EN-DC, *gapFR1* cannot be set up by NR RRC (i.e. only LTE RRC can configure FR1 measurement gap). In NE-DC, *gapFR1* can only be set up by NR RRC (i.e. LTE RRC cannot configure FR1 gap). In NR-DC, *gapFR1* can only be set up in the *measConfig* associated with MCG. *gapFR1* can not be configured together with *gapUE.* The applicability of the FR1 measurement gap is according to Table 9.1.2-2 and Table 9.1.2-3 in TS 38.133 [14]. |
| ***gapFR2*** |
| Indicates measurement gap configuration applies to FR2 only. In (NG)EN-DC or NE-DC, *gapFR2* can only be set up by NR RRC (i.e. LTE RRC cannot configure FR2 gap). In NR-DC, *gapFR2* can only be set up in the *measConfig* associated with MCG. *gapFR2* cannot be configured together with *gapUE.* The applicability of the FR2 measurement gap is according to Table 9.1.2-2 and Table 9.1.2-3 in TS 38.133 [1 4]. |
| ***gapUE*** |
| Indicates measurement gap configuration that applies to all frequencies (FR1 and FR2). In (NG)EN-DC, *gapUE* cannot be set up by NR RRC (i.e. only LTE RRC can configure per UE measurement gap). In NE-DC, *gapUE* can only be set up by NR RRC (i.e. LTE RRC cannot configure per UE gap). In NR-DC, *gapUE* can only be set up in the *measConfig* associated with MCG. If *gapUE* is configured, then neither *gapFR1* nor *gapFR2* can be configured. The applicability of the per UE measurement gap is according to Table 9.1.2-2 and Table 9.1.2-3 in TS 38.133 [14]. |
| ***gapOffset*** |
| Value *gapOffset* is the gap offset of the gap pattern with MGRP indicated in the field *mgrp.* The value range is from 0 to *mgrp-1.* |
| ***mgl*** |
| Value *mgl* is the measurement gap length in ms of the measurement gap. The measurement gap length is according to in Table 9.1.2-1 in TS 38.133 [14]. Value *ms1dot5* corresponds to 1.5 ms, ms3 corresponds to 3 ms and so on. If *mgl-r16* is signalled, UE shall use *mgl-r16* (with suffix) and ignore the *mgl* (with out suffix). |
| ***mgrp*** |
| Value *mgrp* is measurement gap repetition period in (ms) of the measurement gap. The measurement gap repetition period is according to Table 9.1.2-1 in TS 38.133 [14]. |
| ***mgta*** |
| Value *mgta* is the measurement gap timing advance in ms. The applicability of the measurement gap timing advance is according to clause 9.1.2 of TS 38.133 [14]. Value *ms0* corresponds to 0 ms, *ms0dot25* corresponds to 0.25 ms and *ms0dot5* corresponds to 0.5 ms. For FR2, the network only configures 0 ms and 0.25 ms. |
| ***refFR2ServCelllAsyncCA*** |
| Indicates the FR2 serving cell identifier whose SFN and subframe is used for FR2 gap calculation for this gap pattern with asynchronous CA involving FR2 carrier(s). |
| ***refServCellIndicator*** |
| Indicates the serving cell whose SFN and subframe are used for gap calculation for this gap pattern. Value pCell corresponds to the PCell, pSCell corresponds to the PSCell, and mcg-FR2 corresponds to a serving cell on FR2 frequency in MCG. |

The measurement gap configuration information (MeasGapConfig) may have features below.
- The measurement gap configuration information (MeasGapConfig) is configuration information configured from the BS 1e-02 to the UE 1e-01, and the BS may determine whether to set up or release the gap configuration information (GapConfig). That is, the UE cannot request the BS to set up or release the gap configuration information (GapConfig).
- When the BS 1e-02 configures the UE 1e-01 with gap configuration information (GapConfig) for a first frequency range (FR1), each of parameters included in the gap configuration information (GapConfig) cannot be configured as at least two parameters. That is, gapOffset, mgl, mgta, and the like may each be configured as only one value. Equally, even when the BS 1e-02 configures the UE 1e-01 with gap configuration information (GapConfig) for a second frequency range (FR2) or the UE, each of parameters included in the gap configuration information (GapConfig) cannot be configured as two values.

In operation 1e-10, the UE 1e-01 in an RRC connected mode may perform measurement by applying the measurement gap configuration information. A time point when the measurement is to be performed may be determined as below.
- If gapFR1 is set to "setup" (if gapFR1 is set to setup):
   O If FR1 measurement gap configuration information is already set up, the UE 1e-01 may release the FR1 measurement gap configuration (if an FR1 measurement gap configuration is already setup, release the FR1 measurement gap configuration);
   O In operation 1e-10, the UE 1e-01 may set up FR1 measurement gap configuration information indicated by the measurement gap configuration information (MeasGapConfig) received in operation 1e-05. In detail, a first subframe where each gap occurs and a system frame number (SFN) have to satisfy the condition 0 below (setup the FR1 measurement gap configuration indicated by the measGapConfig in accordance with the received gapOffset, i.e., the first subframe of each gap occurs at an SFN and subframe meeting the following condition 1):

### <condition 0>

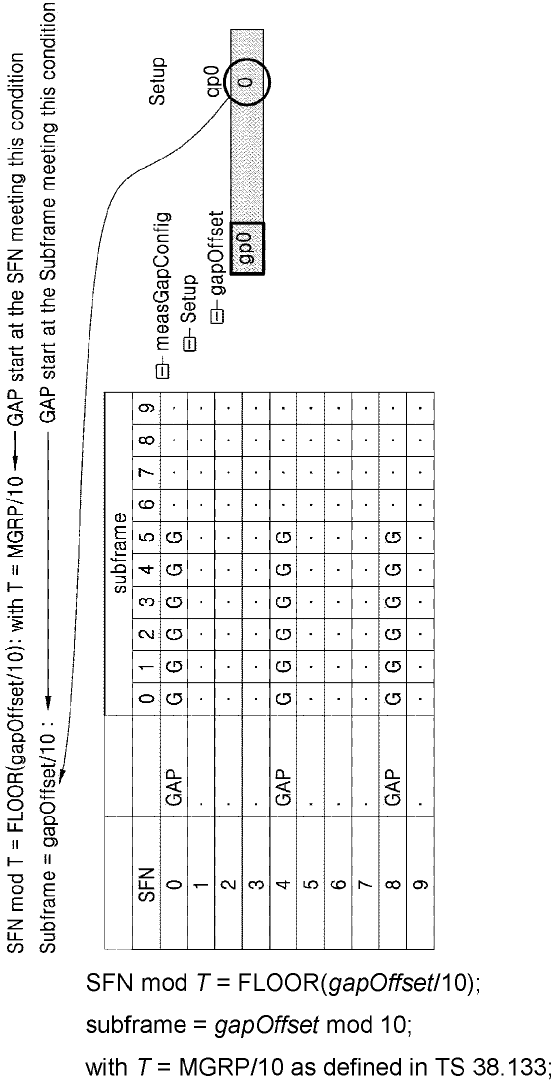

∘ The UE 1e-01 may apply mgta to gap occurrence based on the condition being satisfied. That is, the UE 1e-01 may apply timing advance indicated by mgta to a time point of the gap occurrence based on the condition 0 being satisfied. For example, the UE 1e-01 may start measurement before a gap subframe occurrence by the timing advance indicated by mgta (apply the specified timing advance mgta to the gap occurrences calculated above (i.e. the UE starts the measurement mgta ms before the gap subframe occurrences));
   - Otherwise, if gapFR1 is set to "release" (else if gapFR1 is set to release):
o the UE 1e-01 may release the FR1 measurement gap configuration information (release the FR1 measurement gap configuration);
   - If gapFR2 is set to "setup" (if gapFR2 is set to setup):
∘ if FR2 measurement gap configuration is already set up, the UE 1e-01 may release the FR2 measurement gap configuration information (if an FR2 measurement gap configuration is already setup, release the FR2 measurement gap configuration);
∘ In operation 1e-10, the UE 1e-01 may set up the FR2 measurement gap configuration information indicated by the received measurement gap configuration information (measGapConfig). In detail, a first subframe where each gap occurs and an SFN have to satisfy the condition 0 above (setup the FR2 measurement gap configuration indicated by the measGapConfig in accordance with the received gapOffset, i.e., the first subframe of each gap occurs at an SFN and subframe meeting the above condition 1):
   ∘ The UE 1e-01 may apply mgta to gap occurrence based on the condition 0 being satisfied. That is, the UE 1e-01 may apply timing advance indicated by mgta to a time point of the gap occurrence based on the condition 0 being satisfied. For example, the UE 1e-01 may start measurement before a gap subframe occurrence by mgta (apply the specified timing advance mgta to the gap occurrences calculated above (i.e. the UE starts the measurement mgta ms before the gap subframe occurrences));

   - Otherwise, if gapFR2 is set to "release" (else if gapFR2 is set to release):
      o the UE 1e-01 may release the FR2 measurement gap configuration information (release the FR2 measurement gap configuration);
   - if gapUE is set to "setup" (if gapUE is set to setup):
      ∘ if per UE measurement gap configuration is already set up, the UE 1e-01 may release the per UE measurement gap configuration information (if a per UE measurement gap configuration is already setup, release the per UE measurement gap configuration);
      ∘ In operation 1e-10, the UE 1e-01 may set up per UE measurement gap configuration information indicated by the received measurement gap configuration information (measGapConfig). In detail, a first subframe where each gap occurs and an SFN have to satisfy the condition 0 above (setup the per UE measurement gap configuration indicated by the measGapConfig in accordance with the received gapOffset, i.e., the first subframe of each gap occurs at an SFN and subframe meeting the above condition 1):
         ∘ The UE 1e-01 may apply mgta to gap occurrence based on the condition 0 being satisfied. That is, the UE 1e-01 may apply timing advance indicated by mgta to a time point of the gap occurrence based on the condition 0 being satisfied. For example, the UE 1e-01 may start measurement before a gap subframe occurrence by the timing advance indicated by mgta (apply the specified timing advance mgta to the gap occurrences calculated above (i.e. the UE starts the measurement mgta ms before the gap subframe occurrences));
   - Otherwise, if gapUE is set to "release" (else if gapUE is set to release):
      o the UE 1e-01 may release per UE measurement gap configuration information (release the per UE measurement gap configuration);

In operation 1e-15, the BS 1e-02 may transmit a preset RRC message (e.g., an RRC connection resume message (RRCResume) or an RRC connection reconfiguration message (RRCReconfiguration) to the UE 1e-01. needForGapsConfigNR may be configuration information indicating a report of measurement gap requirement information about NR target bands, and requestedTargetBandFilterNR included in needForGapsConfig may include one or more NR frequency band values (FreqBandlndicatiorNR). When the preset RRC message includes needForGapsConfigNR, the UE 1e-01 may perform a procedure below.
- If needForGapsCofigNR is set to "setup" (if needForGapsConfigNR is set to setup):
   o the UE 1e-01 may identify that it is configured to provide measurement gap requirement information about NR target bands to the BS 1e-02. (consider itself to be configured to provide the measurement gap requirement information of NR target bands);
- otherwise (else),
   o the UE 1e-01 may identify that it is not configured to provide measurement gap requirement information about NR target bands to the BS 1e-02. (consider itself not to be configured to provide the measurement gap requirement information of NR target bands);

In operation 1e-20, when it is configured for the UE 1e-01 to provide measurement gap requirement information about NR target bands to the BS 1e-02, the UE 1e-01 may transmit, to the BS 1e-02, a preset RRC message (e.g., an RRC connection resume completion message (RRCResumeComplete) or an RRC connection reconfiguration completion message (RRCReconfigurationComplete) as a response message to the RRC message received in operation 1e-15) including needForGapsinfoNR (information indicating measurement gap requirement information for NR target bands). The UE 1e-01 may add information below to needForGapsInfoNR.
- The UE 1e-01 may include, in intraFreq-needForGap, gap requirement information about intra-frequency measurement for each NR serving cell (include intraFreq-needForGap and set the gap requirement informantion of intra-frequency measurement for each NR serving cell). In more detail, intraFreq-needForGap may include an indicator (servCellld) of each NR serving cell and an indicator (gaplndicationlntra) indicating whether a corresponding NR serving cell requires a gap.
- If requestedTargetBandFilterNR is configured, the UE 1e-01 may include gap requirement information in interFreq-needForGap for each supported NR band included in requestedTargetBandFilterNR. Otherwise, the UE 1e-01 may include gap requirement information in interFreq-needForGap for each supported NR band (if requestedTargetBandFilterNR is configured, for each supported NR band that is also included in requestedTargetBandFilterNR, include an entry in interFreq-needForGap and set the gap requirement information for that band; otherwise, include an entry in interFreq-needForGap and set the corresponding gap requirement information for each supported NR band).

needForGapsinfoNR above may include features below.
- The UE 1e-01 may notify the BS 1e-02 of whether a measurement gap is requested for each frequency band or each cell.

In operation 1e-25, the BS 1e-02 may transmit, to the UE 1e-01, a preset RRC message (e.g., an RRC connection resume message (RRCResume) or an RRC connection reconfiguration message (RRCReconfiguration) including measurement configuration information (measConfig). Operations thereafter may be equal to operations described above.

FIG. 1F is a diagram in which a UE supporting multiple universal subscriber identity modules (USIMs) (multi-USIM UE) performs an operation associated with one USIM while the UE maintains its RRC connected mode (RRC_CONNECTED) with a BS associated with another USIM, according to an embodiment of the present disclosure.

A multi-USIM UE 1f-01 according to an embodiment of the present disclosure may refer to a UE that supports two or more USIMs. For convenience of descriptions, in the present disclosure, a dual-USIM UE that supports two USIMs is considered. The dual-USIM UE may transmit signal only to a BS associated with one USIM, in a given time. (It is obvious that signal may be simultaneously transmitted to BSs respectively associated with USIMs.) On the other hand, the dual-USIM UE is enabled to receive signal from a BS associated with one USIM or simultaneously receive signal from BSs respectively associated with USIMs, in a given time.

Referring to FIG. 1F, the multi-USIM UE 1f-01 may refer to a UE capable of supporting a plurality of USIMs in one device. For example, the multi-USIM UE 1f-01 may indicate a USIM 1 UE 1f-02 when operating with USIM 1 and may indicate a USIM 2 UE 1f-03 when operating with USIM 2. A BS may not recognize the multi-USIM UE 1f-01 as one UE but may recognize a UE for each of multiple USIMs. For example, a NW1 1f-04 may recognize the USIM 1 UE 1f-02 as one UE, and a NW2 1f-05 may recognize the USIM 2 UE 1f-03 as one UE. Hereinafter, in embodiments of the present disclosure, for convenience of descriptions, when the multi-USIM UE 1f-01 performs communication by using USIM 1, the multi-USIM UE 1f-01 is referred to as the USIM 1 UE 1f-02, and when the multi-USIM UE 1f-01 performs communication by using USIM 2, the multi-USIM UE 1f-01 is referred to as the USIM 2 UE 1f-03. That is, the multi-USIM UE 1f-01 may be the USIM 1 UE 1f-02 or the USIM 2 UE 1f-03, depending on which USIM among USIM 1 and USIM 2 is used.

In operation 1f-10, the USIM 1 UE 1f-02 may be in an RRC connected mode (RRC_CONNECTED) by establishing RRC connection to the NW1 1f-04. The USIM 1 UE 1f-02 in the RRC connected mode may transmit and receive data to and from the NW1 1f-04.

In operation 1f-11, the USIM 2 UE 1f-03 may not establish RRC connection to the NW2 1f-05 but may be in an RRC idle mode (RRC_IDLE) or an RRC inactive mode (RRC_INACTIVE).

In operation 1f-15, the USIM 1 UE 1f-02 may transmit a UE capability information message (UECapabilitylnformation) to the NW1 1f-04. The UE capability information message may include an indicator or an information element indicating that the USIM 1 UE 1f-02 supports multiple USIMs. Alternatively, the UE capability information message may include, for a multi-USIM operation, an indicator indicating that the USIM 2 UE 1f-03 can communicate with the NW2 1f-05 or UE capability information indicating that information (e.g., switching gap configuration information required/preferred by the USIM 2 UE 1f-03 to perform an operation associated with the NW2 1f-05) necessary for the USIM 2 UE 1f-03 to perform communication with the NW2 1f-05 can be transmitted, while the USIM 1 UE 1f-02 maintains an RRC connected mode with respect to the NW1 1f-04. Hereinafter, in embodiments of the present disclosure, for convenience of descriptions, a procedure in which the USIM 2 UE 1f-03 performs an operation associated with the NW2 1f-05 while the USIM 1 UE 1f-02 maintains an RRC connected mode with respect to the NW1 1f-04 may be referred to as a short-time switching (STS) procedure. That is, the USIM 1 UE may notify the NW1 1f-04 of information about whether the STS is supported (1f-15), by including the information in the UE capability information message.

In operation 1f-20, the NW1 1f-04 may transmit, to the USIM 1 UE 1f-02, a preset RRC message including STS gap preference configuration information (STS-GapPreferenceConfig). For example, the preset RRC message may refer to an RRCReconfiguration message. The STS gap preference configuration information may include at least one of the followings.

An indicator or an information element indicating, by the NW1 1f-04, whether the USIM 1 UE 1f-02 can perform an STS procedure
▪ The NW1 1f-04 configures the USIM 1 UE 1f-02 with the indicator or the information element, such that the USIM 1 UE 1f-02 may determine that it is available to perform the STS procedure with the NW1 1f-04.

A new prohibit timer value for the STS procedure
▪ When the NW1 1f-04 configures or sets up a prohibit timer value for the USIM 1 UE 1f-02, the USIM 1 UE 1f-02 may determine that it is available to perform the STS procedure with the NW1 1f-04. When the USIM 1 UE 1f-02 starts the STS procedure (i.e., when a preset RRC message or MAC control element (CE) for the STS is transmitted to the NW1), the USIM 1 UE 1f-02 may start a timer with the prohibit timer value. Obviously, the NW1 1f-04 may release the prohibit timer value with respect to the USIM 1 UE 1f-02, and when it is released, the USIM 1 UE 1f-02 may determine that it is not available to perform the STS procedure with the NW1 1f-02. When the NW1 1f-04 configures the USIM 1 UE 1f-02 with the prohibit timer value, the NW1 1f-04 may set the prohibit timer value to be smaller than or equal to or smaller than a datalnactivity timer value.

In operation 1f-25, the USIM 2 UE 1f-03 may determine whether to perform a preset operation in an RRC idle mode or an RRC inactive mode. The preset operation may mean that the USIM 2 UE 1f-03 may perform at least one of following operations. However, the present disclosure is not limited to the operations below.
The USIM 2 UE 1f-03 monitors a paging channel or a short message associated with the NW2 1f-05. For example, the USIM 2 UE 1f-03 may monitor a paging occasion for every discontinuous reception (DRX) cycle.
The USIM 2 UE 1f-03 performs monitoring to receive a system information change notification associated with the NW2 1f-05. For example, the USIM 2 UE 1f-03 may monitor a paging occasion for every DRX cycle.
The USIM 2 UE 1f-03 may request and obtain on-demand system information so as to obtain system information periodically broadcast and associated with the NW2 1f-05 or obtain the system information in an on-demand manner.
The USIM 2 UE 1f-03 performs a cell selection or cell reselection evaluation procedure. For example, the USIM 2 UE 1f-03 may perform measurement of a serving cell or a neighboring cell, as the cell selection or cell reselection evaluation procedure.
The USIM 2 UE 1f-03 may perform a public land mobile network (PLMN) selection procedure.
The USIM 2 UE 1f-03 may perform a registration update procedure or an RAN notification area update procedure.
The USIM 2 UE 1f-03 may transmit and receive a short message service (SMS) to and from the NW2 1f-05.

In a case where a paging message transmitted from the NW2 1f-05 includes a UE identifier indicating the USIM 2 UE 1f-03 but the USIM 1 UE 1f-02 has to continuously perform data transmission and reception with the NW1 1f-04, the USIM 2 UE 1f-03 may perform a procedure for transmitting busy indication indicating that the paging message received from the NW2 1f-05 cannot be responded. For example, the procedure for transmitting the busy indication may mean a procedure in which, after the USIM 2 UE 1f-03 in an RRC idle mode performs an RRC connection configuration procedure with the NW2 1f-05 and then transitions to an RRC connected mode, the USIM 2 UE 1f-03 notifies that a paging message from the NW2 1f-05 is well received but cannot be responded, by including the busy indication in a dedicated NAS message included in an RRCSetupComplete message or an RRCSetupComplete message. Alternatively, the procedure for transmitting the busy indication may mean a procedure in which, after the USIM 2 UE 1f-03 in an RRC inactive mode performs an RRC connection resume procedure with the NW2 1f-05 and then transitions to an RRC connected mode, the USIM 2 UE 1f-03 notifies that a paging message from the NW2 1f-05 is well received but cannot be responded, by including the busy indication in a dedicated NAS message included in an RRCSetupComplete message or an RRCSetupComplete message, or the USIM 2 UE 1f-03 notifies that a paging message from the NW2 1f-05 is well received but cannot be responded, by including the busy indication in an RRCResumeRequest/1 message.

The operation above may be a periodic operation, an aperiodic operation, or a one-time operation. When the USIM 2 UE 1f-03 performs the aforementioned operation, the USIM 1 UE 1f-02 may perform operations below according to Tx/Rx capabilities of the multi-USIM UE 1f-01.
· The USIM 1 UE 1f-02 may suspend or not perform transmission with respect to the NW1 1f-04.
· If the multi-USIM UE 1f-01 is capable of simultaneously receiving data for respective USIMs, the USIM 1 UE 1f-02 may perform reception with respect to the NW1 1f-04. Otherwise, the USIM 1 UE 1f-02 may suspend or not perform data reception with respect to the NW1 1f-04.

In operation 1f-30, the USIM 2 UE 1f-03 may notify the USIM 1 UE 1f-02 of a plurality of pieces of information required to perform, in an RRC idle mode or an RRC inactive mode, the operation described in operation 1f-25.

In operation 1f-35, the USIM 1 UE 1f-02 may transmit a preset RRC message including Preferred STS-GapConfig to the NW1 1f-04 so as to request the NW1 1f-04 for one or more short-time switching gap configuration information (Short-time switching gap configuration) based on the information received from the USIM 2 UE 1f-03 in operation 1f-30. For example, the preset RRC message may indicate UEAssistancelnformation or a new RRC message. In detail, in consideration of conditions below, when at least one condition or some conditions or all the conditions are satisfied, the USIM 1 UE 1f-02 may transmit the preset RRC message including Preferred STS-GapConfig to the NW1 1f-04.
· Condition 1: When a preset RRC message including Preferred STS-GapConfig has never been transmitted after STS-GapPreferenceConfig is configured
· Condition 2: When current Preferred STS-GapConfig is different from most-recently transmitted Preferred STS-GapConfig
· Condition 3: When current Preferred STS-GapConfig is different from most-recently transmitted Preferred STS-GapConfig and the new prohibit timer described above in operation 1f-20 is not running
· Condition 4: When current Preferred STS-GapConfig is different from most-recently configured STS-GapConfig
· Condition 5: When current Preferred STS-GapConfig is different from most-recently configured STS-GapConfig and the new prohibit timer described above in operation 1f-20 is not running

For reference, when the new prohibit timer described above in operation 1f-20 is set, in operation 1f-35, the USIM 1 UE 1f-02 may start or restart a new timer with the new prohibit timer value when the USIM 1 UE 1f-02 transmits the preset RRC message including the Preferred STS-GapConfig to the NW1 1f-04. The Preferred STS-GapConfig may indicate configuration information different from the measurement configuration information (MeasConfig) in the aforementioned embodiment. In detail, one or more Preferred STS-GapConfigs according to an embodiment of the present disclosure may be different from MeasGapConfig of the aforementioned embodiment as below.
Preferred STS-GapConfig is configuration information transmitted from the USIM 1 UE 1f-02 to the NW1 1f-04 for a request.
· Preferred STS-GapConfig may include one or more gap patterns according to operations requested in operation 1f-25. For example, Preferred STS-GapConfig may include one long periodicity (mgrp) and one or more gap offset values, and may include switching gap length, switching gap timing advance, and refServCelllndicator mapped to each gap offset. Alternatively, Preferred STS-GapConfig may include switching gap repetition periodicity, gap offset, switching gap duration, switching gap timing advance, and refServCelllndicator for each gap pattern. Alternatively, Preferred STS-GapConfig may include an indicator indicating that a particular gap pattern among the plurality of gap patterns does not periodically occur but occurs in a one-shot manner or may not include a value of mgrp. Alternatively, the one or more gap patterns may be pre-fixed and thus, a gap pattern index value may be included in Preferred STS-GapConfig. For example, a particular combination of switching gap repetition periodicity, gap offset, switching gap length, switching gap timing advance, and refServCelllndicator may be mapped to gap pattern 1.
· Preferred STS-GapConfig may include one or more gap patterns for each FR or each UE, as in MeasGapConfig of the aforementioned embodiment.
· Preferred STS-GapConfig may be applied for each band, as in NeedForGaplnfoNR of the aforementioned embodiment, and a difference therebetween is that one or more gap patterns may be included for each band.
· The USIM 1 UE 1f-02 may request, via Preferred STS-GapConfig, the NW1 1f-04 to release one or more unnecessary gap patterns among one or more configured gap patterns. In the release request, the USIM 1 UE 1f-02 may release one or more gap patterns requested for release, according to a response from the NW1 1f-04. Alternatively, when the USIM 1 UE 1f-02 transmits a preset RRC message including a request for releasing one or more gap patterns or successfully transmits the preset RRC message, after the release request to the NW1 1f-04, the USIM 1 UE 1f-02 may perform release without a response from the NW1 1f-04.

In operation 1f-40, as a response to operation 1f-35, the NW1 1f-04 may transmit a preset RRC message including STS-GapConfig, based on the Preferred STS-GapConfig requested by the USIM 1 UE 1f-02. For example, the preset RRC message may indicate RRCReconfiguration or UEInformationRequest or a new RRC message. In detail, the NW1 1f-04 may include allowable (or configurable) information of the received Preferred STS-GapConfig in the STS-GapConfig (obviously, unconfigurable information may also be included in STS-GapConfig) or may modify (by delta) and include some information in STS-GapConfig. The USIM 1 UE 1f-02 may apply the preset RRC message.

In operation 1f-45, as a response to the preset RRC message received in operation 1f-40, the USIM 1 UE 1f-02 may transmit a preset RRC message to the NW1 1f-04. The reason why the preset RRC message is transmitted is to notify that the preset RRC message transmitted from the NW1 1f-04 in operation 1f-40 is successfully received/applied by the USIM 1 UE 1f-02. For example, the preset RRC message may indicate RRCReconfigurationComplete or UEInformationResponse or a new RRC message or the like.

In operation 1f-50, the USIM 1 UE 1f-02 may determine whether STS-gap occurs, based on STS-GapConfig applied in operation 1f-40. For example, STS-gap may be determined as below.
- If STS-GapConfig is set to "setup":
   o If STS-gapConfig is already set up, the USIM 1 UE 1f-02 may release STS-gapConfig corresponding thereto;
   ∘ The USIM 1 UE 1f-02 may set up one or more gap patterns indicated in STS-gapConfig received in operation 1f-40. In detail, a first subframe where each STS-gap occurs and a SFN have to satisfy the condition 0 below. The SFN may be according to PCell or a cell indicated by a refServCelllndicator.

### <Condition 0>

SFN mod *T* = FLOOR(*gapOffset*/10);
subframe = *gapOffset* mod 10;
with *T* = MGRP/10 as defined in TS 38.133;
   ∘ The USIM 1 UE 1f-02 may apply a switching gap timing advance to a gap that occurs by satisfying the condition 0. That is, the USIM 1 UE 1f-02 may apply a timing advance to a time point of the gap occurring by satisfying the condition 0, the timing advance being indicated by the switching gap timing advance. For example, the USIM 1 UE 1f-02 may determine that an STS gap occurs earlier than a time point of occurrence of a gap subframe by the switching gap timing advance.
   ∘ The constant value 10 in the <condition 0> may be configured as a different constant value or may be configured as a value set by the NW1 1f-04 in operation 1f-40 or may be configured as a specific value requested by the USIM 1 UE 1f-02 in operation 1f-35.

- The USIM 1 UE 1f-02 may release one or more gap patterns released in STS-gapConfig.

In operation 1f-50, when STS-gap occurs, in operation 1f-55, the USIM 2 UE 1f-03 may perform at least one of operations described in operation 1f-25. That is, during a switching gap length in the STS-gap occurring in operation 1f-50, the USIM 2 UE 1f-03 may perform at least one of the operations described in operation 1f-25. The USIM 1 UE 1f-02 may not perform (or may suspend) transmission with respect to the NW1 1f-04, and as described above, may perform or not perform (or may suspend) reception, according to Rx capability.

When required thereafter, operation 1f-25 to operation 1f-55 may be re-performed.

FIG. 1G is a diagram in which a UE supporting multiple USIMs (multi-USIM UE) manages short-time switching gap configuration information when one USIM transitions to an RRC connected mode, according to an embodiment of the present disclosure.

A multi-USIM UE 1g-01 according to an embodiment of the present disclosure may refer to a UE that supports two or more USIMs. For convenience of descriptions, in the present disclosure, a dual-USIM UE that supports two USIMs is considered. The dual-USIM UE may transmit signal only to a BS associated with one USIM, in a given time. (It is obvious that signal may be simultaneously transmitted to BSs respectively associated with USIMs.) On the other hand, the dual-USIM UE is enabled to receive siganl from a BS associated with one USIM or simultaneously receive signal from BSs respectively associated with USIMs, in a given time.

Referring to FIG. 1G, the multi-USIM UE 1g-01 may refer to a UE capable of supporting a plurality of USIMs in one device. For example, the multi-USIM UE 1g-01 may indicate a USIM 1 UE 1g-02 when operating with USIM 1 and may indicate a USIM 2 UE 1g-03 when operating with USIM 2. A BS may not recognize the multi-USIM UE 1g-01 as one UE but may recognize a UE for each of multiple USIMs. For example, a NW1 1g-04 may recognize the USIM 1 UE 1g-02 as one UE, and a NW2 1g-05 may recognize the USIM 2 UE 1g-03 as one UE. Hereinafter, in embodiments of the present disclosure, for convenience of descriptions, when the multi-USIM UE 1g-01 performs communication by using USIM 1, the multi-USIM UE 1g-01 is referred to as the USIM 1 UE 1g-02, and when the multi-USIM UE 1g-01 performs communication by using USIM 2, the multi-USIM UE 1g-01 is referred to as the USIM 2 UE 1g-03. That is, the multi-USIM UE 1g-01 may be the USIM 1 UE 1g-02 or the USIM 2 UE 1g-03, depending on which USIM among USIM 1 and USIM 2 is used.

In operation 1g-10, the USIM 1 UE 1g-02 may be in an RRC connected mode (RRC_CONNECTED) by establishing RRC connection to the NW1 1g-04. In the RRC connected mode, the USIM 1 UE 1g-02 may transmit and receive data to and from the NW1 1g-04.

In operation 1g-11, the USIM 2 UE 1g-03 may not establish RRC connection to the NW2 1g-05, and thus, may be in an RRC idle mode (RRC_IDLE) or an RRC inactive mode (RRC_INACTIVE).

In operation 1g-15, the USIM 1 UE 1g-02 may transmit a UE capability information message (UECapabilitylnformation) to the NW1 1g-04. The UE capability information message may include an indicator or an information element indicating that the USIM 1 UE 1g-02 supports multiple USIMs. Alternatively, the UE capability information message may include, for a multi-USIM operation, an indicator indicating that the USIM 2 UE 1g-03 can communicate with the NW2 1g-05 or UE capability information indicating that information (e.g., switching gap configuration information required/preferred by the USIM 2 UE 1g-03 to perform an operation associated with the NW2 1g-05) necessary for the USIM 2 UE 1g-03 to perform communication with the NW2 1g-05 can be transmitted, while the USIM 1 UE 1g-02 maintains an RRC connected mode with respect to the NW1 1g-04. Hereinafter, in embodiments of the present disclosure, for convenience of descriptions, a procedure in which the USIM 2 UE 1g-03 performs an operation associated with the NW2 1g-05 while the USIM 1 UE 1g-02 maintains an RRC connected mode with respect to the NW1 1g-04 may be referred to as a STS procedure. That is, the USIM 1 UE 1g-02 may notify the NW1 1g-04 of information about whether the STS is supported (1g-15), by including the information in the UE capability information message.

In operation 1g-20, the NW1 1g-04 may transmit, to the USIM 1 UE 1g-02, a preset RRC message including STS gap preference configuration information (STS-GapPreferenceConfig). For example, the preset RRC message may refer to an RRCReconfiguration message. The STS gap preference configuration information may include at least one of the followings.
· An indicator or an information element indicating, by the NW1 1g-04, whether the USIM 1 UE 1g-02 can perform an STS procedure
   ▪ The NW1 1g-04 configures the USIM 1 UE 1g-02 with the indicator or the information element, such that the USIM 1 UE 1g-02 may determine that it is available to perform the STS procedure with the NW1 1g-04.
A new prohibit timer value for the STS procedure
   ▪ When the NW1 1g-04 configures or sets up a prohibit timer value for the USIM 1 UE 1g-02, the USIM 1 UE 1g-02 may determine that it is available to perform the STS procedure with the NW1 1g-04. When the USIM 1 UE 1g-02 starts the STS procedure (i.e., when a preset RRC message or MAC CE for the STS is transmitted to the NW1), the USIM 1 UE 1g-02 may start a timer with the prohibit timer value. Obviously, the NW1 1g-04 may release the prohibit timer value with respect to the USIM 1 UE 1g-02, and when it is released, the USIM 1 UE 1g-02 may determine that it is not available to perform the STS procedure with the NW1 1g-02. When the NW1 1g-04 configures the USIM 1 UE 1g-02 with the prohibit timer value, the NW1 1g-04 may set the prohibit timer value to be smaller than or equal to or smaller than a datalnactivity timer value.

In operation 1g-25, the USIM 2 UE 1g-03 may determine whether to perform a preset operation in an RRC idle mode or an RRC inactive mode. The preset operation may mean that the USIM 2 UE 1g-03 may perform at least one of following operations. However, the present disclosure is not limited to the operations below.
· The USIM 2 UE 1g-03 monitors a paging channel or a short message associated with the NW2 1g-05. For example, the USIM 2 UE 1g-03 may monitor a paging occasion for every DRX cycle.
· The USIM 2 UE 1g-03 performs monitoring to receive a system information change notification associated with the NW2 1g-05. For example, the USIM 2 UE 1g-03 may monitor a paging occasion for every DRX cycle.
· The USIM 2 UE 1g-03 may request and obtain on-demand system information so as to obtain system information periodically broadcast and associated with the NW2 1g-05 or obtain the system information in an on-demand manner.
· The USIM 2 UE 1g-03 performs a cell selection or cell reselection evaluation procedure. For example, the USIM 2 UE 1g-03 may perform measurement of a serving cell or a neighboring cell, as the cell selection or cell reselection evaluation procedure.
· The USIM 2 UE 1g-03 may perform a PLMN selection procedure.
· The USIM 2 UE 1g-03 may perform a registration update procedure or an RAN notification area update procedure.
· The USIM 2 UE 1g-03 may transmit and receive a SMS to and from the NW2 1g-05.
· In a case where a paging message transmitted from the NW2 1g-05 includes a UE identifier indicating the USIM 2 UE 1g-03 but the USIM 1 UE 1g-02 has to continuously perform data transmission and reception with the NW1 1g-04, the USIM 2 UE 1g-03 may perform a procedure for transmitting busy indication indicating that the paging message received from the NW2 1g-05 cannot be responded. For example, the procedure for transmitting the busy indication may mean a procedure in which, after the USIM 2 UE 1g-03 in an RRC idle mode performs an RRC connection configuration procedure with the NW2 1g-05 and then transitions to an RRC connected mode, the USIM 2 UE 1g-03 notifies that a paging message from the NW2 1g-05 is well received but cannot be responded, by including the busy indication in a dedicated NAS message included in an RRCSetupComplete message or an RRCSetupComplete message. Alternatively, the procedure for transmitting the busy indication may mean a procedure in which, after the USIM 2 UE 1g-03 in an RRC inactive mode performs an RRC connection resume procedure with the NW2 1g-05 and then transitions to an RRC connected mode, the USIM 2 UE 1g-03 notifies that a paging message from the NW2 1g-05 is well received but cannot be responded, by including the busy indication in a dedicated NAS message included in an RRCSetupComplete message or an RRCSetupComplete message, or the USIM 2 UE 1g-03 notifies that a paging message from the NW2 1g-05 is well received but cannot be responded, by including the busy indication in an RRCResumeRequest/1 message.

The operation above may be a periodic operation, an aperiodic operation, or a one-time operation. When the USIM 2 UE 1g-03 performs the aforementioned operation, the USIM 1 UE 1g-02 may perform operations below according to Tx/Rx capabilities of the multi-USIM UE 1g-01.
· The USIM 1 UE 1g-02 may suspend or not perform transmission with respect to the NW1 1g-04.
· If the multi-USIM UE 1g-01 is capable of simultaneously receiving data for respective USIMs, the USIM 1 UE 1g-02 may perform reception with respect to the NW1 1g-04. Otherwise, the USIM 1 UE 1g-02 may suspend or not perform data reception with respect to the NW1 1g-04.

In operation 1g-30, the USIM 2 UE 1g-03 may notify the USIM 1 UE 1g-02 of a plurality of pieces of information required to perform, in an RRC idle mode or an RRC inactive mode, the operation described in operation 1g-25.

In operation 1g-35, the USIM 1 UE 1g-02 may transmit a preset RRC message including Preferred STS-GapConfig to the NW1 1g-04 so as to request the NW1 1g-04 for one or more short-time switching gap configurations based on the information received from the USIM 2 UE 1g-03 in operation 1g-30. For example, the preset RRC message may indicate UEAssistancelnformation or a new RRC message. In detail, in consideration of conditions below, when at least one condition or some conditions or all the conditions are satisfied, the USIM 1 UE 1g-02 may transmit the preset RRC message including Preferred STS-GapConfig to the NW1 1g-04.
· Condition 1: When a preset RRC message including Preferred STS-GapConfig has never been transmitted after STS-GapPreferenceConfig is configured
· Condition 2: When current Preferred STS-GapConfig is different from most-recently transmitted Preferred STS-GapConfig
· Condition 3: When current Preferred STS-GapConfig is different from most-recently transmitted Preferred STS-GapConfig and the new prohibit timer described above in operation 1g-20 is not running
· Condition 4: When current Preferred STS-GapConfig is different from most-recently configured STS-GapConfig
· Condition 5: When current Preferred STS-GapConfig is different from most-recently configured STS-GapConfig and the new prohibit timer described above in operation 1g-20 is not running

For reference, when the new prohibit timer described above in operation 1g-20 is set, in operation 1g-35, the USIM 1 UE 1g-02 may start or restart a new timer with the new prohibit timer value when the USIM 1 UE 1g-02 transmits the preset RRC message including the Preferred STS-GapConfig to the NW1 1g-04. The Preferred STS-GapConfig may indicate configuration information different from the measurement configuration information (MeasConfig) in the aforementioned embodiment. In detail, one or more Preferred STS-GapConfigs according to an embodiment of the present disclosure may be different from MeasGapConfig of the aforementioned embodiment as below.
· Preferred STS-GapConfig is configuration information transmitted from the USIM 1 UE 1g-02 to the NW1 1g-04 for a request.
· Preferred STS-GapConfig may include one or more gap patterns according to operations requested in operation 1g-25. For example, Preferred STS-GapConfig may include one long periodicity (mgrp) and one or more gap offset values, and may include switching gap length, switching gap timing advance, and refServCelllndicator mapped to each gap offset. Alternatively, Preferred STS-GapConfig may include switching gap repetition periodicity, gap offset, switching gap duration, switching gap timing advance, and refServCelllndicator for each gap pattern. Alternatively, Preferred STS-GapConfig may include an indicator indicating that a particular gap pattern among the plurality of gap patterns does not periodically occur but occurs in a one-shot manner or may not include a value of mgrp. A gap pattern that periodically occurs and a gap pattern that occurs in a one-shot manner may be included in a separate information element. Alternatively, the one or more gap patterns may be pre-fixed and thus, gap pattern index values thereof may be included in Preferred STS-GapConfig. For example, a specific combination of switching gap repetition periodicity, gap offset, switching gap length, switching gap timing advance, and refServCelllndicator may be mapped to gap pattern 1.
· Preferred STS-GapConfig may include one or more gap patterns for each FR or each UE, as in MeasGapConfig of the aforementioned embodiment.
· Preferred STS-GapConfig may be applied for each band, as in NeedForGaplnfoNR of the aforementioned embodiment, and a difference therebetween is that one or more gap patterns may be included for each band.
· The USIM 1 UE 1g-02 may request, via Preferred STS-GapConfig, the NW1 1g-04 to release one or more unnecessary gap patterns among one or more configured gap patterns. In the release request, the USIM 1 UE 1g-02 may release one or more gap patterns requested for release, according to a response from the NW1 1g-04. Alternatively, when the USIM 1 UE 1g-02 transmits a preset RRC message including a request for releasing one or more gap patterns or successfully transmits the preset RRC message, after the release request to the NW1 1g-04, the USIM 1 UE 1g-02 may perform release without a response from the NW1 1g-04.
· Delta configuration may be supported to transmit Preferred STS-GapConfig. For example, only modified Preferred STS-GapConfig may be transmitted.

In operation 1g-40, as a response to operation 1g-35, the NW1 1g-04 may transmit a preset RRC message including STS-GapConfig, based on the Preferred STS-GapConfig requested by the USIM 1 UE 1g-02. For example, the preset RRC message may indicate RRCReconfiguration or UEInformationRequest or a new RRC message. In detail, the NW1 1g-04 may include allowable (or configurable) information of the received Preferred STS-GapConfig in the STS-GapConfig (obviously, unconfigurable information may also be included in STS-GapConfig) or may modify (by delta) and include some information in STS-GapConfig. The USIM 1 UE 1g-02 may apply the preset RRC message.

In operation 1g-45, as a response to the preset RRC message received in operation 1g-40, the USIM 1 UE 1g-02 may transmit a preset RRC message to the NW1 1g-04. The reason why the preset RRC message is transmitted is to notify that the preset RRC message transmitted from the NW1 1g-04 in operation 1g-40 is successfully received/applied by the USIM 1 UE 1g-02. For example, the preset RRC message may indicate RRCReconfigurationComplete or UEInformationResponse or a new RRC message or the like.

In operation 1g-50, the NW1 1g-04 may transmit an RRCRelease message including suspend configuration information (suspendConfig) to the USIM 1 UE 1g-02.

In operation 1g-55, the USIM 1 UE 1g-02 may store, in UE Inactive AS Context, STS-GapConfig configured in operation 1g-40. The reason why an embodiment of the present disclosure proposes that the USIM 1 UE 1g-02 stores, in UE Inactive AS Context, STS-GapConfig configured in operation 1g-40 is for the USIM 1 UE 1g-02 to reconstruct and use STS-GapConfig stored in UE Inactive AS Context in an RRC connection resume procedure thereafter.

In operation 1g-60, the USIM 1 UE 1g-02 may transition to an RRC inactive mode (RRC_INACTIVE).

In operation 1g-65, the USIM 1 UE 1g-02 may start an RRC connection resume procedure or an RRC connection resume procedure may be triggered. For example, when the USIM 1 UE 1g-02 receives RAN paging transmitted from the NW1 1g-04, the USIM 1 UE 1g-02 may start an RRC connection resume procedure.

In operation 1g-70, the USIM 1 UE 1g-02 may release STS-GapConfig stored in UE Inactive AS Context. Then, the USIM 1 UE 1g-02 may transmit an RRCResumeRequest or RRCResumeRequest1 message to the NW1 1g-04 (operation 1g-75), may receive an RRCResume message from the NW1, in response thereto (operation 1g-80), and may transmit an RRCResumeComplete message (operation 1g-85), thereby performing an RRC connection resume procedure.

An embodiment of the present disclosure has a feature in which the USIM 1 UE 1g-02 stores STS-GapConfig in UE Inactive AS Context in an RRC inactive mode transition procedure but releases STS-GapConfig stored in UE Inactive AS Context when RRC connection resume starts. This is to reconstruct and use STS-GapConfig stored in UE Inactive AS Context, in Release thereafter. If STS-GapConfig is not stored in UE Inactive AS Context in the RRC inactive mode transition procedure, there may be a problem that the NW1 1g-04 has to include an indicator in an RRCRelease message being transmitted for the USIM 1 UE 1g-02 to transition to an RRC inactive mode, the indicator indicating to store STS-GapConfig in UE Inactive AS Context. Alternatively, there may be a problem that an indicator has to be included, the indicator indicating that a UE capable of not releasing STS-GapConfig stored in UE Inactive AS Context when RRC connection resume starts via system information shall maintain it. In a case where the USIM 1 UE 1g-02 stores STS-GapConfig in UE Inactive AS Context in the RRC inactive mode transition procedure but releases STS-GapConfig stored in UE Inactive AS Context when RRC connection resume starts, implementation of the USIM 1 UE 1g-02 may be easy but operations 1g-20 to 1g-45 have to performed again after an RRC connection resume procedure is completed, such that more signaling procedures may be necessary to perform a short-time switching procedure.

FIG. 1H is a diagram in which a UE supporting multiple USIMs (multi-USIM UE) manages short-time switching gap configuration information when one USIM transitions to an RRC connected mode, according to an embodiment of the present disclosure.

A multi-USIM UE 1h-01 according to an embodiment of the present disclosure may refer to a UE that supports two or more USIMs. For convenience of descriptions, in the present disclosure, a dual-USIM UE that supports two USIMs is considered. The dual-USIM UE may transmit signal only to a BS associated with one USIM, in a given time. (It is obvious that signal may be simultaneously transmitted to BSs respectively associated with USIMs.) On the other hand, the dual-USIM UE is enabled to receive signal from a BS associated with one USIM or simultaneously receive signal from BSs respectively associated with USIMs, in a given time.

Referring to FIG. 1H, the multi-USIM UE 1h-01 may refer to a UE capable of supporting a plurality of USIMs in one device. For example, the multi-USIM UE 1h-01 may indicate a USIM 1 UE 1h-02 when operating with USIM 1 and may indicate a USIM 2 UE 1h-03 when operating with USIM 2. A BS may not recognize the multi-USIM UE 1h-01 as one UE but may recognize a UE for each of multiple USIMs. For example, a NW1 1h-04 may recognize the USIM 1 UE 1h-02 as one UE, and a NW2 1h-05 may recognize the USIM 2 UE 1h-03 as one UE. Hereinafter, in embodiments of the present disclosure, for convenience of descriptions, when the multi-USIM UE 1h-01 performs communication by using USIM 1, the multi-USIM UE 1h-01 is referred to as the USIM 1 UE 1h-02, and when the multi-USIM UE performs communication by using USIM 2, the multi-USIM UE is referred to as the USIM 2 UE 1h-03. That is, the multi-USIM UE 1h-01 may be the USIM 1 UE 1h-02 or the USIM 2 UE 1h-03, depending on which USIM among USIM 1 and USIM 2 is used.

In operation 1h-10, the USIM 1 UE 1h-02 may be in an RRC connected mode (RRC_CONNECTED) by establishing RRC connection to the NW1 1h-04. In the RRC connected mode, the USIM 1 UE 1h-02 may transmit and receive data to and from the NW1 1h-04.

In operation 1h-11, the USIM 2 UE 1h-03 may not establish RRC connection to the NW2 1h-05, and thus, may be in an RRC idle mode (RRC_IDLE) or an RRC inactive mode (RRC_INACTIVE).

In operation 1h-15, the USIM 1 UE 1h-02 may transmit a UE capability information message (UECapabilitylnformation) to the NW1 1h-04. The UE capability information message may include an indicator or an information element indicating that the USIM 1 UE 1h-02 supports multiple USIMs. Alternatively, the UE capability information message may include, for a multi-USIM operation, an indicator indicating that the USIM 2 UE 1h-03 can communicate with the NW2 1h-05 or UE capability information indicating that information (e.g., switching gap configuration information required/preferred by the USIM 2 UE 1h-03 to perform an operation associated with the NW2 1h-05) necessary for the USIM 2 UE 1h-03 to perform communication with the NW2 1h-05 can be transmitted, while the USIM 1 UE 1h-02 maintains an RRC connected mode with respect to the NW1 1h-04. Hereinafter, in embodiments of the present disclosure, for convenience of descriptions, a procedure in which the USIM 2 UE 1h-03 performs an operation associated with the NW2 1h-05 while the USIM 1 UE 1h-02 maintains an RRC connected mode with respect to the NW1 1h-04 may be referred to as a STS procedure. That is, the USIM 1 UE 1h-02 may notify the NW1 1h-04 of information about whether the STS is supported (1h-15), by including the information in the UE capability information message.

In operation 1h-20, the NW1 1h-04 may transmit, to the USIM 1 UE 1h-02, a preset RRC message including STS gap preference configuration information (STS-GapPreferenceConfig). For example, the preset RRC message may refer to an RRCReconfiguration message. The STS gap preference configuration information may include at least one of the followings.
· An indicator or an information element indicating, by the NW1 1h-04, whether the USIM 1 UE 1h-02 can perform an STS procedure
   ▪ The NW1 1h-04 configures the USIM 1 UE 1h-02 with the indicator or the information element, such that the USIM 1 UE 1h-02 may determine that it is available to perform the STS procedure with the NW1 1h-04.
A new prohibit timer value for the STS procedure
   ▪ When the NW1 1h-04 configures or sets up a prohibit timer value for the USIM 1 UE 1h-02, the USIM 1 UE 1h-02 may determine that it is available to perform the STS procedure with the NW1 1h-04. When the USIM 1 UE 1h-02 starts the STS procedure (i.e., when a preset RRC message or MAC CE for the STS is transmitted to the NW1), the USIM 1 UE 1h-02 may start a timer with the prohibit timer value. Obviously, the NW1 1h-04 may release the prohibit timer value with respect to the USIM 1 UE 1h-02, and when it is released, the USIM 1 UE 1h-02 may determine that it is not available to perform the STS procedure with the NW1 1h-02. When the NW1 1h-04 configures the USIM 1 UE 1h-02 with the prohibit timer value, the NW1 1h-04 may set the prohibit timer value to be smaller than or equal to or smaller than a datalnactivity timer value.

In operation 1h-25, the USIM 2 UE 1h-03 may determine whether to perform a preset operation in an RRC idle mode or an RRC inactive mode. The preset operation may mean that the USIM 2 UE 1h-03 may perform at least one of following operations. However, the present disclosure is not limited to the operations below.
· The USIM 2 UE 1h-03 monitors a paging channel or a short message associated with the NW2 1h-05. For example, the USIM 2 UE 1h-03 may monitor a paging occasion for every DRX cycle.
· The USIM 2 UE 1h-03 performs monitoring to receive a system information change notification associated with the NW2 1h-05. For example, the USIM 2 UE 1h-03 may monitor a paging occasion for every DRX cycle.
· The USIM 2 UE 1h-03 may request and obtain on-demand system information so as to obtain system information periodically broadcast and associated with the NW2 1h-05 or obtain the system information in an on-demand manner.
· The USIM 2 UE 1h-03 performs a cell selection or cell reselection evaluation procedure. For example, the USIM 2 UE may perform measurement of a serving cell or a neighboring cell, as the cell selection or cell reselection evaluation procedure.
· The USIM 2 UE 1h-03 may perform a PLMN selection procedure.
The USIM 2 UE 1h-03 may perform a registration update procedure or an RAN notification area update procedure.
The USIM 2 UE 1h-03 may transmit and receive a SMS to and from the NW2 1h-05.
· In a case where a paging message transmitted from the NW2 1h-05 includes a UE identifier indicating the USIM 2 UE 1h-03 but the USIM 1 UE 1h-02 has to continuously perform data transmission and reception with the NW1 1h-04, the USIM 2 UE 1h-03 may perform a procedure for transmitting busy indication indicating that the paging message received from the NW2 1h-05 cannot be responded. For example, the procedure for transmitting the busy indication may mean a procedure in which, after the USIM 2 UE 1h-03 in an RRC idle mode performs an RRC connection configuration procedure with the NW2 1h-05 and then transitions to an RRC connected mode, the USIM 2 UE 1h-03 notifies that a paging message from the NW2 1h-05 is well received but cannot be responded, by including the busy indication in a dedicated NAS message included in an RRCSetupComplete message or an RRCSetupComplete message. Alternatively, the procedure for transmitting the busy indication may mean a procedure in which, after the USIM 2 UE 1h-03 in an RRC inactive mode performs an RRC connection resume procedure with the NW2 1h-05 and then transitions to an RRC connected mode, the USIM 2 UE 1h-03 notifies that a paging message from the NW2 1h-05 is well received but cannot be responded, by including the busy indication in a dedicated NAS message included in an RRCSetupComplete message or an RRCSetupComplete message, or the USIM 2 UE 1h-03 notifies that a paging message from the NW2 1h-05 is well received but cannot be responded, by including the busy indication in an RRCResumeRequest/1 message.

The operation above may be a periodic operation, an aperiodic operation, or a one-time operation. When the USIM 2 UE 1h-03 performs the aforementioned operation, the USIM 1 UE 1h-02 may perform operations below according to Tx/Rx capabilities of the multi-USIM UE 1h-01.
· The USIM 1 UE 1h-02 may suspend or not perform transmission with respect to the NW1 1h-04.
· If the multi-USIM UE 1h-01 is capable of simultaneously receiving data for respective USIMs, the USIM 1 UE 1h-02 may perform reception with respect to the NW1 1h-04. Otherwise, the USIM 1 UE 1h-02 may suspend or not perform data reception with respect to the NW1 1h-04.

In operation 1h-30, the USIM 2 UE 1h-03 may notify the USIM 1 UE 1h-02 of a plurality of pieces of information required to perform, in an RRC idle mode or an RRC inactive mode, the operation described in operation 1h-25.

In operation 1h-35, the USIM 1 UE 1h-02 may transmit a preset RRC message including Preferred STS-GapConfig to the NW1 1h-04 so as to request the NW1 1h-04 for one or more short-time switching gap configurations based on the information received from the USIM 2 UE 1h-03 in operation 1h-30. For example, the preset RRC message may indicate UEAssistancelnformation or a new RRC message. In detail, in consideration of conditions below, when at least one condition or some conditions or all the conditions are satisfied, the USIM 1 UE 1h-02 may transmit the preset RRC message including Preferred STS-GapConfig to the NW1 1h-04.
· Condition 1: When a preset RRC message including Preferred STS-GapConfig has never been transmitted after STS-GapPreferenceConfig is configured
· Condition 2: When current Preferred STS-GapConfig is different from most-recently transmitted Preferred STS-GapConfig
· Condition 3: When current Preferred STS-GapConfig is different from most-recently transmitted Preferred STS-GapConfig and the new prohibit timer described above in operation 1h-20 is not running
· Condition 4: When current Preferred STS-GapConfig is different from most-recently configured STS-GapConfig
· Condition 5: When current Preferred STS-GapConfig is different from most-recently configured STS-GapConfig and the new prohibit timer described above in operation 1h-20 is not running

For reference, when the new prohibit timer described above in operation 1h-20 is set, in operation 1h-35, the USIM 1 UE 1h-02 may start or restart a new timer with the new prohibit timer value when the USIM 1 UE 1h-02 transmits the preset RRC message including the Preferred STS-GapConfig to the NW1 1h-04. The Preferred STS-GapConfig may indicate configuration information different from the measurement configuration information (MeasConfig) in the aforementioned embodiment. In detail, one or more Preferred STS-GapConfigs according to an embodiment of the present disclosure may be different from MeasGapConfig of the aforementioned embodiment as below.
· Preferred STS-GapConfig is configuration information transmitted from the USIM 1 UE 1h-02 to the NW1 1h-04 for a request.
Preferred STS-GapConfig may include one or more gap patterns according to operations requested in operation 1h-25. For example, Preferred STS-GapConfig may include one long periodicity (mgrp) and one or more gap offset values, and may include switching gap length, switching gap timing advance, and refServCelllndicator mapped to each gap offset. Alternatively, Preferred STS-GapConfig may include switching gap repetition periodicity, gap offset, switching gap duration, switching gap timing advance, and refServCelllndicator for each gap pattern. Alternatively, Preferred STS-GapConfig may include an indicator indicating that a particular gap pattern among the plurality of gap patterns does not periodically occur but occurs in a one-shot manner or may not include a value of mgrp. A gap pattern that periodically occurs and a gap pattern that occurs in a one-shot manner may be included in a separate information element. Alternatively, the one or more gap patterns may be pre-fixed and thus, gap pattern index values thereof may be included in Preferred STS-GapConfig. For example, a specific combination of switching gap repetition periodicity, gap offset, switching gap length, switching gap timing advance, and refServCelllndicator may be mapped to gap pattern 1.
· Preferred STS-GapConfig may include one or more gap patterns for each FR or each UE, as in MeasGapConfig of the aforementioned embodiment.
· Preferred STS-GapConfig may be applied for each band, as in NeedForGaplnfoNR of the aforementioned embodiment, and a difference therebetween is that one or more gap patterns may be included for each band.
· The USIM 1 UE 1h-02 may request, via Preferred STS-GapConfig, the NW1 1h-04 to release one or more unnecessary gap patterns among one or more configured gap patterns. In the release request, the USIM 1 UE 1h-02 may release one or more gap patterns requested for release, according to a response from the NW1 1h-04. Alternatively, when the USIM 1 UE 1h-02 transmits a preset RRC message including a request for releasing one or more gap patterns or successfully transmits the preset RRC message, after the release request to the NW1 1h-04, the USIM 1 UE 1h-02 may perform release without a response from the NW1 1h-04.
· Delta configuration may be supported to transmit Preferred STS-GapConfig. For example, only modified Preferred STS-GapConfig may be transmitted.

In operation 1h-40, as a response to operation 1h-35, the NW1 1h-04 may transmit a preset RRC message including STS-GapConfig, based on the Preferred STS-GapConfig requested by the USIM 1 UE 1h-02. For example, the preset RRC message may indicate RRCReconfiguration or UEInformationRequest or a new RRC message. In detail, the NW1 1h-04 may include allowable (or configurable) information of the received Preferred STS-GapConfig in the STS-GapConfig (obviously, unconfigurable information may also be included in STS-GapConfig) or may modify (by delta) and include some information in STS-GapConfig. The USIM 1 UE 1h-02 may apply the preset RRC message.

In operation 1h-45, as a response to the preset RRC message received in operation 1h-40, the USIM 1 UE 1h-02 may transmit a preset RRC message to the NW1 1h-04. The reason why the preset RRC message is transmitted is to notify that the preset RRC message transmitted from the NW1 1h-04 in operation 1h-40 is successfully received/applied by the USIM 1 UE 1h-02. For example, the preset RRC message may indicate RRCReconfigurationComplete or UEInformationResponse or a new RRC message or the like.

In operation 1h-50, the NW1 1h-04 may transmit an RRCRelease message including suspend configuration information (suspendConfig) to the USIM 1 UE 1h-02.

In operation 1h-55, the USIM 1 UE 1h-02 may store, in UE Inactive AS Context, STS-GapConfig configured in operation 1h-40. The reason why an embodiment of the present disclosure proposes that the USIM 1 UE 1h-02 stores, in UE Inactive AS Context, STS-GapConfig configured in operation 1h-40 is for the USIM 1 UE 1h-02 to reconstruct and use STS-GapConfig stored in UE Inactive AS Context in an RRC connection resume procedure thereafter.

In operation 1h-60, the USIM 1 UE 1h-02 may transition to an RRC inactive mode (RRC_INACTIVE).

In operation 1h-61, the NW1 1h-04 may broadcast system information. Via the system information, an indicator indicating whether the NW1 1h-04 or a cell supports short-switching gap may be broadcast. For example, the indicator may be broadcast via system information block1 (SIB1).

In operation 1h-65, the USIM 1 UE 1h-02 may start an RRC connection resume procedure or an RRC connection resume procedure may be triggered. For example, when the USIM 1 UE 1h-02 receives RAN paging transmitted from the NW1 1h-04, the USIM 1 UE 1h-02 may start an RRC connection resume procedure.

In operation 1h-70, the USIM 1 UE 1h-02 may release or not release STS-GapConfig stored in UE Inactive AS Context. If the indicator indicating whether the NW1 1h-04 or a cell supports short-switching gap is broadcast via the system information received in operation 1h-61, the USIM 1 UE 1h-02 may not release STS-GapConfig stored in UE Inactive AS Context. On the other hand, if the indicator indicating whether the NW1 1h-04 or a cell supports short-switching gap is not broadcast via the system information received in operation 1h-61, the USIM 1 UE 1h-02 may release STS-GapConfig stored in UE Inactive AS Context. Then, the USIM 1 UE 1h-02 may transmit an RRCResumeRequest or RRCResumeRequest1 message to the NW1 1h-04 (operation 1h-75), may receive an RRCResume message from the NW1, in response thereto (operation 1h-80), and may transmit an RRCResumeComplete message (operation 1h-85), thereby performing an RRC connection resume procedure. In operation 1h-80, the NW1 1h-04 may modify or reconfigure STS-GapConfig via the RRCResume message. In operation 1h-85, the USIM 1 UE 1h-02 may include, in the RRCResumeComplete message, Preferred STS-GapConfig described above in operation 1h-35. If, in operation 1h-80, the NW1 1h-04 cannot retrieve UE Context of the USIM 1 UE 1h-02 and thus transmits an RRCSetup message to the USIM 1 UE 1h-02, the USIM 1 UE 1h-02 may release STS-GapConfig stored in UE Inactive AS Context.

An embodiment of the present disclosure has a feature in which the USIM 1 UE 1g-02 stores STS-GapConfig in UE Inactive AS Context in an RRC inactive mode transition procedure but releases or does not release STS-GapConfig stored in UE Inactive AS Context when RRC connection resume starts, according to an indicator indicating whether short-time switching gap is supported, the indicator being included in system information broadcast from a cell.

FIG. 1I is a diagram in which a UE supporting multiple USIMs (multi-USIM UE) manages short-time switching gap configuration information when one USIM transitions to an RRC connected mode, according to an embodiment of the present disclosure.

A multi-USIM UE 1i-01 according to an embodiment of the present disclosure may refer to a UE that supports two or more USIMs. For convenience of descriptions, in the present disclosure, a dual-USIM UE that supports two USIMs is considered. The dual-USIM UE may transmit signal only to a BS associated with one USIM, in a given time. (It is obvious that signal may be simultaneously transmitted to BSs respectively associated with USIMs.) On the other hand, the dual-USIM UE is enabled to receive signal from a BS associated with one USIM or simultaneously receive signal from BSs respectively associated with USIMs, in a given time.

Referring to FIG. 1I, the multi-USIM UE 1i-01 may refer to a UE capable of supporting a plurality of USIMs in one device. For example, the multi-USIM UE 1i-01 may indicate a USIM 1 UE 1i-02 when operating with USIM 1 and may indicate a USIM 2 UE 1i-03 when operating with USIM 2. A BS may not recognize the multi-USIM UE 1i-01 as one UE but may recognize a UE for each of multiple USIMs. For example, a NW1 1i-04 may recognize the USIM 1 UE 1i-02 as one UE, and a NW2 1i-05 may recognize the USIM 2 UE 1i-03 as one UE. Hereinafter, in embodiments of the present disclosure, for convenience of descriptions, when the multi-USIM UE 1i-01 performs communication by using USIM 1, the multi-USIM UE 1i-01 is referred to as the USIM 1 UE 1i-02, and when the multi-USIM UE 1i-01 performs communication by using USIM 2, the multi-USIM UE 1i-01 is referred to as the USIM 2 UE 1i-03. That is, the multi-USIM UE 1i-01 may be the USIM 1 UE 1i-02 or the USIM 2 UE 1i-03, depending on which USIM among USIM 1 and USIM 2 is used.

In operation 1i-10, the USIM 1 UE 1i-02 may be in an RRC connected mode (RRC_CONNECTED) by establishing RRC connection to the NW1 1i-04. In the RRC connected mode, the USIM 1 UE 1i-02 may transmit and receive data to and from the NW1 1i-04.

In operation 1i-11, the USIM 2 UE 1i-03 may not establish RRC connection to the NW2 1i-05, and thus, may be in an RRC idle mode (RRC_IDLE) or an RRC inactive mode (RRC_INACTIVE).

In operation 1i-15, the USIM 1 UE 1i-02 may transmit a UE capability information message (UECapabilitylnformation) to the NW1 1i-04. The UE capability information message may include an indicator or an information element indicating that the USIM 1 UE 1i-02 supports multiple USIMs. Alternatively, the UE capability information message may include, for a multi-USIM operation, an indicator indicating that the USIM 2 UE 1i-03 can communicate with the NW2 1i-05 or UE capability information indicating that information (e.g., switching gap configuration information required/preferred by the USIM 2 UE 1i-03 to perform an operation associated with the NW2 1i-05) necessary for the USIM 2 UE 1i-03 to perform communication with the NW2 1i-05 can be transmitted, while the USIM 1 UE 1i-02 maintains an RRC connected mode with respect to the NW1 1i-04. Hereinafter, in embodiments of the present disclosure, for convenience of descriptions, a procedure in which the USIM 2 UE 1i-03 performs an operation associated with the NW2 1i-05 while the USIM 1 UE 1i-02 maintains an RRC connected mode with respect to the NW1 1i-04 may be referred to as a STS procedure. That is, the USIM 1 UE 1i-02 may notify the NW1 1h-04 of information about whether the STS is supported (1i-15), by including the information in the UE capability information message.

In operation 1i-20, the NW1 1i-04 may transmit, to the USIM 1 UE 1i-02, a preset RRC message including STS gap preference configuration information (STS-GapPreferenceConfig). For example, the preset RRC message may refer to an RRCReconfiguration message. The STS gap preference configuration information may include at least one of the followings.
· An indicator or an information element indicating, by the NW1 1i-04, whether the USIM 1 UE 1i-02 can perform an STS procedure
   ▪ The NW1 1i-04 configures the USIM 1 UE 1i-02 with the indicator or the information element, such that the USIM 1 UE 1i-02 may determine that it is available to perform the STS procedure with the NW1 1i-04.
A new prohibit timer value for the STS procedure
   ▪ When the NW1 1i-04 configures or sets up a prohibit timer value for the USIM 1 UE 1i-02, the USIM 1 UE 1i-02 may determine that it is available to perform the STS procedure with the NW1 1i-04. When the USIM 1 UE 1i-02 starts the STS procedure (i.e., when a preset RRC message or MAC CE for the STS is transmitted to the NW1), the USIM 1 UE 1i-02 may start a timer with the prohibit timer value. Obviously, the NW1 1i-04 may release the prohibit timer value with respect to the USIM 1 UE 1i-02, and when it is released, the USIM 1 UE 1i-02 may determine that it is not available to perform the STS procedure with the NW1 1i-02. When the NW1 1i-04 configures the USIM 1 UE 1i-02 with the prohibit timer value, the NW1 1i-04 may set the prohibit timer value to be smaller than or equal to or smaller than a datalnactivity timer value.

In operation 1i-25, the USIM 2 UE 1i-03 may determine whether to perform a preset operation in an RRC idle mode or an RRC inactive mode. The preset operation may mean that the USIM 2 UE 1i-03 may perform at least one of following operations. However, the present disclosure is not limited to the operations below.
· The USIM 2 UE 1i-03 monitors a paging channel or a short message associated with the NW2 1i-05. For example, the USIM 2 UE 1i-03 may monitor a paging occasion for every DRX cycle.
· The USIM 2 UE 1i-03 performs monitoring to receive a system information change notification associated with the NW2 1i-05. For example, the USIM 2 UE 1i-03 may monitor a paging occasion for every DRX cycle.
· The USIM 2 UE 1i-03 may request and obtain on-demand system information so as to obtain system information periodically broadcast and associated with the NW2 1i-05 or obtain the system information in an on-demand manner.
· The USIM 2 UE 1i-03 performs a cell selection or cell reselection evaluation procedure. For example, the USIM 2 UE may perform measurement of a serving cell or a neighboring cell, as the cell selection or cell reselection evaluation procedure.
· The USIM 2 UE 1i-03 may perform a PLMN selection procedure.
· The USIM 2 UE 1i-03 may perform a registration update procedure or an RAN notification area update procedure.
· The USIM 2 UE 1i-03 may transmit and receive a SMS to and from the NW2 1i-05.
· In a case where a paging message transmitted from the NW2 1i-05 includes a UE identifier indicating the USIM 2 UE 1i-03 but the USIM 1 UE 1i-02 has to continuously perform data transmission and reception with the NW1 1i-04, the USIM 2 UE 1i-03 may perform a procedure for transmitting busy indication indicating that the paging message received from the NW2 1i-05 cannot be responded. For example, the procedure for transmitting the busy indication may mean a procedure in which, after the USIM 2 UE 1i-03 in an RRC idle mode performs an RRC connection configuration procedure with the NW2 1i-05 and then transitions to an RRC connected mode, the USIM 2 UE 1i-03 notifies that a paging message from the NW2 1i-05 is well received but cannot be responded, by including the busy indication in a dedicated NAS message included in an RRCSetupComplete message or an RRCSetupComplete message. Alternatively, the procedure for transmitting the busy indication may mean a procedure in which, after the USIM 2 UE 1i-03 in an RRC inactive mode performs an RRC connection resume procedure with the NW2 1i-05 and then transitions to an RRC connected mode, the USIM 2 UE 1i-03 notifies that a paging message from the NW2 1i-05 is well received but cannot be responded, by including the busy indication in a dedicated NAS message included in an RRCSetupComplete message or an RRCSetupComplete message, or the USIM 2 UE 1i-03 notifies that a paging message from the NW2 1i-05 is well received but cannot be responded, by including the busy indication in an RRCResumeRequest/1 message.

The operation above may be a periodic operation, an aperiodic operation, or a one-time operation. When the USIM 2 UE 1i-03 performs the aforementioned operation, the USIM 1 UE 1i-02 may perform operations below according to Tx/Rx capabilities of the multi-USIM UE 1i-01.
· The USIM 1 UE 1i-02 may suspend or not perform transmission with respect to the NW1 1i-04.
· If the multi-USIM UE 1i-01 is capable of simultaneously receiving data for respective USIMs, the USIM 1 UE 1i-02 may perform reception with respect to the NW1 1i-04. Otherwise, the USIM 1 UE 1i-02 may suspend or not perform data reception with respect to the NW1 1i-04.

In operation 1i-30, the USIM 2 UE 1i-03 may notify the USIM 1 UE 1i-02 of a plurality of pieces of information required to perform, in an RRC idle mode or an RRC inactive mode, the operation described in operation 1i-25.

In operation 1i-35, the USIM 1 UE 1i-02 may transmit a preset RRC message including Preferred STS-GapConfig to the NW1 1i-04 so as to request the NW1 1i-04 for one or more short-time switching gap configurations based on the information received from the USIM 2 UE 1i-03 in operation 1i-30. For example, the preset RRC message may indicate UEAssistancelnformation or a new RRC message. In detail, in consideration of conditions below, when at least one condition or some conditions or all the conditions are satisfied, the USIM 1 UE 1i-02 may transmit the preset RRC message including Preferred STS-GapConfig to the NW1 1i-04.
· Condition 1: When a preset RRC message including Preferred STS-GapConfig has never been transmitted after STS-GapPreferenceConfig is configured
· Condition 2: When current Preferred STS-GapConfig is different from most-recently transmitted Preferred STS-GapConfig
· Condition 3: When current Preferred STS-GapConfig is different from most-recently transmitted Preferred STS-GapConfig and the new prohibit timer described above in operation 1i-20 is not running
· Condition 4: When current Preferred STS-GapConfig is different from most-recently configured STS-GapConfig
· Condition 5: When current Preferred STS-GapConfig is different from most-recently configured STS-GapConfig and the new prohibit timer described above in operation 1i-20 is not running

For reference, when the new prohibit timer described above in operation 1i-20 is set, in operation 1i-35, the USIM 1 UE 1i-02 may start or restart a new timer with the new prohibit timer value when the USIM 1 UE 1i-02 transmits the preset RRC message including the Preferred STS-GapConfig to the NW1 1i-04. The Preferred STS-GapConfig may indicate configuration information different from the measurement configuration information (MeasConfig) in the aforementioned embodiment. In detail, one or more Preferred STS-GapConfigs according to an embodiment of the present disclosure may be different from MeasGapConfig of the aforementioned embodiment as below.
· Preferred STS-GapConfig is configuration information transmitted from the USIM 1 UE 1i-02 to the NW1 1i-04 for a request.
· Preferred STS-GapConfig may include one or more gap patterns according to operations requested in operation 1i-25. For example, Preferred STS-GapConfig may include one long periodicity (mgrp) and one or more gap offset values, and may include switching gap length, switching gap timing advance, and refServCelllndicator mapped to each gap offset. Alternatively, Preferred STS-GapConfig may include switching gap repetition periodicity, gap offset, switching gap duration, switching gap timing advance, and refServCelllndicator for each gap pattern. Alternatively, Preferred STS-GapConfig may include an indicator indicating that a particular gap pattern among the plurality of gap patterns does not periodically occur but occurs in a one-shot manner or may not include a value of mgrp. A gap pattern that periodically occurs and a gap pattern that occurs in a one-shot manner may be included in a separate information element. Alternatively, the one or more gap patterns may be pre-fixed and thus, gap pattern index values thereof may be included in Preferred STS-GapConfig. For example, a specific combination of switching gap repetition periodicity, gap offset, switching gap length, switching gap timing advance, and refServCelllndicator may be mapped to gap pattern 1.
· Preferred STS-GapConfig may include one or more gap patterns for each FR or each UE, as in MeasGapConfig of the aforementioned embodiment.
· Preferred STS-GapConfig may be applied for each band, as in NeedForGaplnfoNR of the aforementioned embodiment, and a difference therebetween is that one or more gap patterns may be included for each band.
· The USIM 1 UE 1i-02 may request, via Preferred STS-GapConfig, the NW1 1i-04 to release one or more unnecessary gap patterns among one or more configured gap patterns. In the release request, the USIM 1 UE 1i-02 may release one or more gap patterns requested for release, according to a response from the NW1 1i-04. Alternatively, when the USIM 1 UE 1h-02 transmits a preset RRC message including a request for releasing one or more gap patterns or successfully transmits the preset RRC message, after the release request to the NW1 1h-04, the USIM 1 UE 1i-02 may perform release without a response from the NW1 1i-04.
· Delta configuration may be supported to transmit Preferred STS-GapConfig. For example, only modified Preferred STS-GapConfig may be transmitted.

In operation 1i-40, as a response to operation 1i-35, the NW1 1i-04 may transmit a preset RRC message including STS-GapConfig, based on the Preferred STS-GapConfig requested by the USIM 1 UE 1i-02. For example, the preset RRC message may indicate RRCReconfiguration or UEInformationRequest or a new RRC message. In detail, the NW1 1i-04 may include allowable (or configurable) information of the received Preferred STS-GapConfig in the STS-GapConfig (obviously, unconfigurable information may also be included in STS-GapConfig) or may modify (by delta) and include some information in STS-GapConfig. The USIM 1 UE 1i-02 may apply the preset RRC message.

In operation 1i-45, as a response to the preset RRC message received in operation 1i-40, the USIM 1 UE 1i-02 may transmit a preset RRC message to the NW1 1i-04. The reason why the preset RRC message is transmitted is to notify that the preset RRC message transmitted from the NW1 1i-04 in operation 1i-40 is successfully received/applied by the USIM 1 UE 1i-02. For example, the preset RRC message may indicate RRCReconfigurationComplete or UEInformationResponse or a new RRC message or the like.

In operation 1i-50, the NW1 1i-04 may transmit an RRCRelease message including suspend configuration information (suspendConfig) to the USIM 1 UE 1i-02.

In operation 1i-55, the USIM 1 UE 1i-02 may store, in UE Inactive AS Context, STS-GapConfig configured in operation 1i-40. The reason why an embodiment of the present disclosure proposes that the USIM 1 UE 1i-02 stores, in UE Inactive AS Context, STS-GapConfig configured in operation 1i-40 is for the USIM 1 UE to reconstruct and use STS-GapConfig stored in UE Inactive AS Context in an RRC connection resume procedure thereafter.

In operation 1i-60, the USIM 1 UE 1i-02 may transition to an RRC inactive mode (RRC_INACTIVE).

In operation 1i-65, the USIM 1 UE 1i-02 may start an RRC connection resume procedure or an RRC connection resume procedure may be triggered. For example, when the USIM 1 UE 1i-02 receives RAN paging transmitted from the NW1 1i-04, the USIM 1 UE 1i-02 may start an RRC connection resume procedure.

In operation 1i-70, the USIM 1 UE 1i-02 does not release STS-GapConfig stored in UE Inactive AS Context. Then, the USIM 1 UE 1i-02 may transmit an RRCResumeRequest or RRCResumeRequest1 message to the NW1 1i-04 (operation 1i-75), and may receive an RRCResume message from the NW1 1i-04, in response thereto (operation 1i-80). An embodiment of the present disclosure proposes that the NW1 1i-04 includes, in an RRCResume message, an indicator (e.g., restoreSTS-GapConfig) as to whether to release or reconstruct STS-GapConfig stored in UE Inactive AS Context. If the RRCResume message includes an indicator indicating to reconstruct STS-GapConfig stored in UE Inactive AS Context, the USIM 1 UE 1i-02 may reconstruct STS-GapConfig stored in UE Inactive AS Context. If the RRCResume message does not include an indicator indicating to reconstruct STS-GapConfig stored in UE Inactive AS Context, the USIM 1 UE 1i-02 may release STS-GapConfig stored in UE Inactive AS Context. In addition, the NW1 1i-04 may modify or reconfigure STS-GapConfig via the RRCResume message. In operation 1i-85, the USIM 1 UE 1i-02 may transmit an RRCResumeComplete message to the NW1 1i-04. Here, the USIM 1 UE 1i-02 may include, in the RRCResumeComplete message, Preferred STS-GapConfig described above in operation 1i-35. This is to update STS-GapConfig stored in UE Inactive AS Context.

In an embodiment of the present disclosure, the USIM 1 UE 1i-02 stores STS-GapConfig in UE Inactive AS Context in an RRC inactive mode transition procedure, and does not determine whether to release or reconstruct STS-GapConfig stored in UE Inactive AS Context when RRC connection resume starts. However, there is a feature in which the USIM 1 UE 1i-02 determines, based on an RRCResume message, whether to release or reconstruct STS-GapConfig stored in Inactive AS Context.

FIG. 1J is a block diagram illustrating an inner configuration of a UE according to an embodiment of the present disclosure.

Referring to FIG. 1J, the UE may include a radio frequency (RF) processor 1j-10, a baseband processor 1j-20, a storage 1j-30, and a controller 1j-40. However, the present disclosure is not limited to the example of FIG. 1J, and the UE may include more elements or fewer elements than those illustrated in FIG. 1J.

The RF processor 1j-10 may perform functions for transmitting and receiving signals via wireless channels, e.g., band conversion and amplification of the signals. The RF processor 1j-10 may up-convert a baseband signal provided from the baseband processor 1j-20, into an RF band signal and then may transmit the RF band signal via an antenna, and may down-convert an RF band signal received via the antenna, into a baseband signal. For example, the RF processor 1j-10 may include a transmit filter, a receive filter, an amplifier, a mixer, an oscillator, a digital-to-analog convertor (DAC), an analog-to-digital convertor (ADC), or the like. However, the present disclosure is not limited thereto. Although only one antenna is illustrated in FIG. 1J, the UE may include a plurality of antennas. Also, the RF processor 1j-10 may include a plurality of RF chains. Also, the RF processor 1j-10 may perform beamforming. For the beamforming, the RF processor 1j-10 may adjust phases and intensities of respective signals that are transmitted or received via a plurality of antennas or antenna elements. Also, the RF processor 1j-10 may perform multiple input multiple output (MIMO), and may receive a plurality of layers when performing an MIMO operation.

The baseband processor 1j-20 may perform conversion between a baseband signal and a bit string based on physical layer specifications of a system. For example, for data transmission, the baseband processor 1j-20 may generate complex symbols by encoding and modulating a transmit bit string. Also, for data reception, the baseband processor 1j-20 may reconstruct a received bit string by demodulating and decoding a baseband signal provided from the RF processor 1j-10. For example, according to an OFDM scheme, for data transmission, the baseband processor 1j-20 may generate complex symbols by encoding and modulating a transmit bit string, may map the complex symbols to subcarriers, and then may configure OFDM symbols by performing inverse fast Fourier transformation (IFFT) and inserting a cyclic prefix (CP). For data reception, the baseband processor 1j-20 may segment a baseband signal provided from the RF processor 1j-10, into OFDM symbol units, may reconstruct signals mapped to subcarriers by performing fast Fourier transformation (FFT), and then may reconstruct a received bit string by demodulating and decoding the signals.

The baseband processor 1j-20 and the RF processor 1j-10 may transmit and receive signals in a manner described above. Accordingly, the baseband processor 1j-20 and the RF processor 1j-10 may also be referred to as a transmitter, a receiver, a transceiver, or a communicator. Furthermore, at least one of the baseband processor 1j-20 and the RF processor 1j-10 may include different communication modules to support different radio access technologies. Also, at least one of the baseband processor 1m-20 and the RF processor 1m-10 may include different communication modules to process signals of different frequency bands. For example, the different radio access technologies may include a wireless local area network (LAN) (e.g., IEEE 802.11), a cellular network (e.g., LTE), or the like. Also, the different frequency bands may include a super-high frequency (SHF) (e.g., 2.NRHz, NRhz) band and a millimeter wave (mmWave) (e.g., 60 GHz) band. The UE may transmit and receive signals to and from a BS by using the baseband processor 1j-20 and the RF processor 1j-10, and the signals may include control information and data.

The storage 1j-30 may store basic programs, application programs, and data, e.g., configuration information, for operations of the UE. The storage 1j-30 may store information associated with a second access node that performs wireless communication by using a second radio access technology. The storage 1j-30 may provide the stored data in response to a request by the controller 1j-40.

The controller 1j-40 may control overall operations of the UE. For example, the controller 1j-40 may transmit and receive signals via the baseband processor 1j-20 and the RF processor 1j-10. Also, the controller 1j-40 records and reads data on or from the storage 1j-40. To this end, the controller 1j-40 may include at least one processor. For example, the controller 1j-40 may include a communication processor (CP) for controlling communications and an application processor (AP) for controlling an upper layer such as an application program. Also, according to an embodiment of the present disclosure, the controller 1j-40 may include a multi-connection processor 1j-42 configured to process processes operating in a multi-connection mode. Also, at least one configuration in the UE may be implemented as one chip.

FIG. 1K is a block diagram illustrating a configuration of a BS according to an embodiment of the present disclosure.

As illustrated in FIG. 1K, the BS includes an RF processor 1k-10, a baseband processor 1k-20, a backhaul communicator 1k-30, a storage 1k-40, and a controller 1k-50. However, the present disclosure is not limited to the example above, and the BS may include more elements or fewer elements than those illustrated in FIG. 1K.

The RF processor 1k-10 may perform functions for transmitting and receiving signals via wireless channels, e.g., band conversion and amplification of the signals. That is, the RF processor 1k-10 may up-convert a baseband signal provided from the baseband processor 1k-20, into an RF band signal and then may transmit the RF band signal via an antenna, and may down-convert an RF band signal received via the antenna, into a baseband signal. For example, the RF processor 1k-10 may include a transmit filter, a receive filter, an amplifier, a mixer, an oscillator, a DAC, an ADC, or the like. However, the present disclosure is not limited thereto. Although only one antenna is illustrated in FIG. 1K, the RF processor 1k-10 may include a plurality of antennas. Also, the RF processor 1k-10 may include a plurality of RF chains. Also, the RF processor 1k-10 may perform beamforming. For the beamforming, the RF processor 1k-10 may adjust phases and intensities of respective signals that are transmitted or received via a plurality of antennas or antenna elements. The RF processor 1k-10 may perform a DL MIMO operation by transmitting one or more layers.

The baseband processor 1k-20 may perform conversion between a baseband signal and a bit string based on physical layer specifications. For example, for data transmission, the baseband processor 1k-20 may generate complex symbols by encoding and modulating a transmit bit string. Also, for data reception, the baseband processor 1k-20 may reconstruct a received bit string by demodulating and decoding a baseband signal provided from the RF processor 1k-10. For example, according to an OFDM scheme, for data transmission, the baseband processor 1k-20 generates complex symbols by encoding and modulating a transmit bit string, maps the complex symbols to subcarriers, and then configures OFDM symbols by performing IFFT and inserting a CP. For data reception, the baseband processor 1k-20 segments a baseband signal provided from the RF processor 1k-10, into OFDM symbol units, reconstructs signals mapped to subcarriers by performing FFT calculation, and then reconstructs a received bit string by demodulating and decoding the signals. The baseband processor 1k-20 and the RF processor 1k-10 transmit and receive signals in a manner described above. Accordingly, the baseband processor 1k-20 and the RF processor 1k-10 may also be referred to as a transmitter, a receiver, a transceiver, a communicator or a wireless communicator. The BS may transmit and receive signals to and from a UE by using the baseband processor 1k-20 and the RF processor 1k-10, and the signals may include control information and data.

The backhaul communicator 1k-30 may provide an interface for performing communication with other nodes in a network. That is, the backhaul communicator 1k-30 may convert a bit string into a physical signal, the bit string being transmitted from the BS to another node, e.g., an auxiliary BS, a core network, etc., and may convert a physical signal into a bit string, the physical signal being received from the other node.

The storage 1k-40 stores basic programs, application programs, and data, e.g., configuration information, for operations of the BS. In particular, the storage 1k-40 may store information about a bearer allocated to the accessing UE, a measurement result reported from the accessing UE, and the like. Also, the storage 1k-40 may store information that is a reference as to whether to provide or stop multi-connection to the UE. The storage 1k-40 may provide the stored data in response to a request by the controller 1k-50. The storage 1k-40 may include any or a combination of storage media such as read only memory (ROM), random access memory (RAM), a hard disk, a compact disc (CD)-ROM, and a digital versatile disc (DVD). Also, the storage 1k-40 may include a plurality of memories.

The controller 1k-50 may control overall operations of the primary BS. For example, the controller 1k-50 may transmit and receive signals via the baseband processor 1k-20 and the RF processor 1k-10 or the backhaul communicator 1k-30. Also, the controller 1k-50 records and reads data on or from the storage 1k-40. To this end, the controller 1k-50 may include at least one processor.

Also, according to an embodiment of the present disclosure, the controller 1k-50 may include a multi-connection processor 1k-52 configured to process processes operating in a multi-connection mode.

The methods according to the embodiments of the present disclosure as described in claims or specification may be implemented as hardware, software, or a combination of hardware and software.

When implemented as software, a computer-readable storage medium or a computer program product, which stores one or more programs (e.g., software modules), may be provided. The one or more programs stored in the computer-readable storage medium or the computer program product are configured for execution by one or more processors in an electronic device. The one or more programs include instructions directing the electronic device to execute the methods according to the embodiments of the present disclosure as described in the claims or the specification.

The programs (e.g., software modules or software) may be stored in non-volatile memory including RAM or flash memory, ROM, electrically erasable programmable read only memory (EEPROM), a magnetic disc storage device, a CD-ROM, a DVD, another optical storage device, or a magnetic cassette. Alternatively, the programs may be stored in memory including a combination of some or all of the above-mentioned storage media. A plurality of such memories may be included.

In addition, the programs may be stored in an attachable storage device accessible via any or a combination of communication networks such as Internet, an intranet, a LAN, a wide LAN (WLAN), a storage area network (SAN), or the like. Such a storage device may access, via an external port, a device performing the embodiments of the present disclosure. Furthermore, a separate storage device on the communication network may access the electronic device performing the embodiments of the present disclosure.

In the afore-described embodiments of the present disclosure, elements included in the present disclosure are expressed in a singular or plural form according to the embodiments of the present disclosure. However, the singular or plural form is appropriately selected for convenience of descriptions and the present disclosure is not limited thereto. As such, an element expressed in a plural form may also be configured as a single element, and an element expressed in a singular form may also be configured as plural elements.

## Claims

1. A method performed by a user equipment, UE, in a wireless communication system, the method comprising:
receiving (1g-20), from a base station, BS, a first radio resource control, RRC, reconfiguration message comprising prohibit timer information related to a multi-universal subscriber identity module, MUSIM;
determining whether a condition for transmitting gap preference information related to the MUSIM to the BS is satisfied;
in case that:
the UE did not transmit a UEAssistanceInformation message comprising the gap preference information since the first RRC reconfiguration message was received, or
the gap preference information is different from most-recently transmitted gap preference information and a prohibit timer set according to the prohibit timer information is not running,
starting the prohibit timer and transmitting (1g-35), to the BS, the UEAssistanceInformation message comprising the gap preference information; and
receiving (1g-40), from the BS, a second RRC reconfiguration message comprising gap configuration information related to the MUSIM.

2. The method of claim 1, further comprising,
receiving, from the BS, an RRC release message comprising suspend configuration information;
storing the gap configuration information in a UE Inactive AS Context and entering an RRC inactive state; and
in case that an RRC connection resume is triggered, releasing the stored gap configuration information.

3. A user equipment, UE, of a wireless communication system, the UE comprising:
a transceiver; and
at least one processor configured to:
receive (1g-20), from a base station, BS, via the transceiver, a first radio resource control, RRC, reconfiguration message comprising prohibit timer information related to a multi-universal subscriber identity module, MUSIM,
determine whether a condition for transmitting gap preference information related to the MUSIM to the BS is satisfied,
in case that:
the UE did not transmit a UEAssistanceInformation message comprising the gap preference information since the first RRC reconfiguration message was received, or
the gap preference information is different from most-recently transmitted gap preference information and a prohibit timer set according to the prohibit timer information is not running,
start the prohibit timer and transmitting (1g-35), to the BS, the UEAssistanceInformation message comprising the gap preference information, and
receive (1g-40), from the BS via the transceiver, a second RRC reconfiguration message comprising gap configuration information related to the MUSIM.

4. The UE of claim 3, wherein the at least one processor is further configured to:
receive, from the BS via the transceiver, an RRC release message comprising suspend configuration information,
store the gap configuration information in a UE Inactive AS Context and entering an RRC inactive state, and
in case that an RRC connection resume is triggered, release the stored gap configuration information.

## Patentansprüche

1. Verfahren, das durch ein Benutzergerät, UE, in einem drahtlosen Kommunikationssystem durchgeführt wird, wobei das Verfahren Folgendes umfasst:
Empfangen (1g-20), von einer Basisstation, BS, einer ersten Funkressourcensteuerungs-, RRC, -Neukonfigurationsnachricht, die Verbots-Timer-Informationen in Bezug auf ein Mehrfach-Universalteilnehmeridentitätsmodul, MUSIM, umfasst;
Bestimmen, ob eine Bedingung zum Übertragen von Lückenpräferenzinformationen in Bezug auf das MUSIM an die BS erfüllt ist;
falls:
das UE seit dem Empfangen der ersten RRC-Neukonfigurationsnachricht keine UEAssistanceInformation-Nachricht übertragen hat, die die Lückenpräferenzinformationen umfasst, oder
sich die Lückenpräferenzinformationen von zuletzt übertragenen Lückenpräferenzinformationen unterscheiden und ein Verbots-Timer, der gemäß den Verbots-Timer-Informationen eingestellt ist, nicht läuft,
Starten des Verbots-Timers und Übertragen (1g-35), an die BS, der UEAssistanceInformation-Nachricht, die die Lückenpräferenzinformationen umfasst; und
Empfangen (1g-40), von der BS, einer zweiten RRC-Neukonfigurationsnachricht, die Lückenkonfigurationsinformationen in Bezug auf das MUSIM umfasst.

2. Verfahren nach Anspruch 1, ferner umfassend,
Empfangen, von der BS, einer RRC-Freigabenachricht, die Unterbrechungskonfigurationsinformationen umfasst;
Speichern der Lückenkonfigurationsinformationen in einem UE-Inactive-AS-Kontext und Eintreten in einen RRC-Inaktivitätszustand; und
falls eine RRC-Verbindungswiederaufnahme ausgelöst wird, Freigeben der gespeicherten Lückenkonfigurationsinformationen.

3. Benutzergerät, UE, eines drahtlosen Kommunikationssystems, wobei das UE Folgendes umfasst:
einen Transceiver; und
mindestens einen Prozessor, der konfiguriert ist zum:
Empfangen (1g-20), von einer Basisstation, BS, über den Transceiver, einer ersten Funkressourcensteuerungs-, RRC, -Neukonfigurationsnachricht, die Verbots-Timer-Informationen in Bezug auf ein Mehrfach-Universalteilnehmeridentitätsmodul, MUSIM, umfasst,
Bestimmen, ob eine Bedingung zum Übertragen von Lückenpräferenzinformationen in Bezug auf das MUSIM an die BS erfüllt ist,
falls:
das UE seit dem Empfangen der ersten RRC-Neukonfigurationsnachricht keine UEAssistanceInformation-Nachricht übertragen hat, die die Lückenpräferenzinformationen umfasst, oder
sich die Lückenpräferenzinformationen von zuletzt übertragenen Lückenpräferenzinformationen unterscheiden und ein Verbots-Timer, der gemäß den Verbots-Timer-Informationen eingestellt ist, nicht läuft,
Starten des Verbots-Timers und Übertragen (1g-35), an die BS, der UEAssistanceInformation-Nachricht, die die Lückenpräferenzinformationen umfasst, und
Empfangen (1g-40), von der BS über den Transceiver, einer zweiten RRC-Neukonfigurationsnachricht, die Lückenkonfigurationsinformationen in Bezug auf das MUSIM umfasst.

4. UE nach Anspruch 3, wobei der mindestens eine Prozessor ferner konfiguriert ist zum:
Empfangen, von der BS über den Transceiver, einer RRC-Freigabenachricht, die Unterbrechungskonfigurationsinformationen umfasst,
Speichern der Lückenkonfigurationsinformationen in einem UE-Inactive-AS-Kontext und Eintreten in einen RRC-Inaktivitätszustand, und
falls eine RRC-Verbindungswiederaufnahme ausgelöst wird, Freigeben der gespeicherten Lückenkonfigurationsinformationen.

## Revendications

1. Procédé exécuté par un équipement utilisateur, UE, dans un système de communication sans fil, le procédé comprenant :
recevoir (1g-20), en provenance d'une station de base, BS, un premier message de reconfiguration de commande de ressources radio, RRC, comprenant des informations de temporisateur d'interdiction relatives à un module d'identité d'abonné multi-universel, MUSIM ;
déterminer si une condition de transmission à la BS d'informations de préférence d'écart liées au MUSIM est remplie ;
au cas où :
l'UE n'a pas transmis de message UEAssistanceInformation comprenant les informations de préférence d'écart depuis la réception du premier message de reconfiguration RRC, ou
les informations de préférence d'écart sont différentes des informations de préférence d'écart transmises le plus récemment et un temporisateur d'interdiction défini en fonction des informations de temporisateur d'interdiction n'est pas en cours d'exécution,
démarrer le temporisateur d'interdiction et transmettre (1g-35), à la BS, le message UEAssistanceInformation comprenant les informations de préférence d'écart ; et
recevoir (1g-40), depuis la BS, un deuxième message de reconfiguration RRC comprenant des informations de configuration d'écart relatives au MUSIM.

2. Procédé de la revendication 1, comprenant en outre,
recevoir, depuis la BS, un message de libération RRC comprenant des informations de configuration de suspension ;
stocker les informations de configuration d'écart dans un contexte AS inactif de l'UE et entrer dans un état RRC inactif ; et
dans le cas où une reprise de connexion RRC est déclenchée, libérer les informations de configuration d'écart stockées.

3. Équipement utilisateur, UE, d'un système de communication sans fil, l'UE comprenant :
un émetteur-récepteur ; et
au moins un processeur configuré pour :
recevoir (1g-20), en provenance d'une station de base, BS, via l'émetteur-récepteur, un premier message de reconfiguration de commande de ressources radio, RRC, comprenant des informations de temporisateur d'interdiction relatives à un module d'identité d'abonné multi-universel, MUSIM,
déterminer si une condition de transmission à la BS d'informations de préférence d'écart liées au MUSIM est remplie,
au cas où :
l'UE n'a pas transmis de message UEAssistanceInformation comprenant les informations de préférence d'écart depuis la réception du premier message de reconfiguration RRC, ou
les informations de préférence d'écart sont différentes des informations de préférence d'écart transmises le plus récemment et un temporisateur d'interdiction défini en fonction des informations de temporisateur d'interdiction n'est pas en cours d'exécution,
démarrer le temporisateur d'interdiction et transmettre (1g-35), à la BS, le message UEAssistanceInformation comprenant les informations de préférence d'écart ; et
recevoir (1g-40), depuis la station de base via l'émetteur-récepteur, un deuxième message de reconfiguration RRC comprenant des informations de configuration d'écart relatives au MUSIM.

4. UE de la revendication 3, au moins un processeur est en outre configuré pour :
recevoir, depuis la BS via l'émetteur-récepteur, un message de libération RRC comprenant des informations de configuration de suspension,
stocker les informations de configuration d'écart dans un contexte AS inactif de l'UE et entrer dans un état RRC inactif ; et
dans le cas où une reprise de connexion RRC est déclenchée, libérer les informations de configuration d'écart stockées.
